# EUROPEAN PATENT APPLICATION

(11) **EP 4 803 303 A1**
(43) Date of publication of application: **09.09.2026**
(21) Application number: 24885856.5
(22) Date of filing: 31.10.2024
(51) Int. Cl.: B32B 15/08, B32B 15/085, B32B 27/32, H01M 10/613, H01M 10/6555, H01M 50/204

(54) **EXTERIOR MATERIAL FOR PARTITION MEMBER, METHOD FOR MANUFACTURING EXTERIOR MATERIAL FOR PARTITION MEMBER, PARTITION MEMBER, AND STRUCTURE**

(30) Priority: 31.10.2023 JP 2023187246
(71) Applicant: Dai Nippon Printing Co., Ltd., Tokyo 162-8001 (JP)
(72) Inventor: MUNEDA, Taku, Tokyo 162-8001 (JP)
(74) Representative: Müller-Boré & Partner Patentanwälte PartG mbB
(86) International application number: PCT/JP2024/038992
(87) International publication number: WO 2025/095090

(57) **Abstract**

Provided is an exterior material for a partition member. The exterior material for a partition member is used for a partition member disposed between a plurality of heating elements, and is composed of a laminate including at least a metal layer and a hot-melt adhesive resin layer, wherein the metal layer includes a corrosion-resistant film on a surface of the hot-melt adhesive resin layer.

## Description

### Technical Field

The present disclosure relates to an exterior material for a partition member, a method for manufacturing an exterior material for a partition member, a partition member, and a structure.

### Background Art

In a structure having a plurality of heating elements, for example, a partition member for cooling the heating elements is disposed between the plurality of heating elements. The partition member includes, for example, a coolant and an exterior material for packaging the coolant (for example, PTLs 1 to 3).

For example, PTL 1 discloses a battery module configured by arranging a plurality of cells, in which a cooling unit containing a coolant is provided in the vicinity of the cells, the cooling unit includes a seal portion formed by sealing a sheet-shaped member, and an easy-to-open portion which is opened when the cell abnormally generates heat is provided in part of the seal portion. In the battery module (structure), a cooling unit as a partition member is disposed between the cells as a plurality of heating elements.

### Citation List

### Patent Literatures

PTL 1: WO 2012/032697 A
PTL 2: WO 2012/060031 A
PTL 3: WO 2018/124231 A

### Summary of Invention

### Technical Problem

The partition member disposed between the plurality of heating elements is required to have dimensional stability. However, as a result of examination by the inventor of the present disclosure, the inventor has found that there is a case where, due to an influence of contents (for example, a coolant containing water) packaged by an exterior material, a gas is generated inside a partition member and the partition member expands. More specifically, the inventor of the present disclosure has found a novel problem in that, in a case where the exterior material of the partition member includes a metal layer, the metal layer of the exterior material and the contents react with each other to generate a gas, and the partition member may expand, and when the partition member expands, the position of the heating element may be displaced, or the heating element may be compressed, so that the characteristics of the heating element may be deteriorated.

A main object of the present disclosure is to provide an exterior material for a partition member in which expansion of the partition member is suppressed, and a partition member and a structure which use the exterior material.

### Solution to Problem

The inventors of the present disclosure have conducted intensive studies in order to solve the problems as described above. As a result, it has been found that expansion of a partition member is suppressed by configuring an exterior material for a partition member used for a partition member disposed between a plurality of heating elements from a laminate including at least a metal layer and a heat-sealable resin layer, and providing a corrosion-resistant film on a surface of the metal layer on the heat-sealable resin layer side.

The present disclosure has been completed by further conducting studies based on such findings. That is, the present disclosure provides inventions of the following aspects.

An exterior material for a partition member being used for a partition member disposed between a plurality of heating elements, the exterior material for a partition member including a laminate including at least a metal layer and a heat-sealable resin layer, wherein
the metal layer includes a corrosion-resistant film on a surface on the heat-sealable resin layer side.

### Advantageous Effects of Invention

According to the present disclosure, it is possible to provide an exterior material for a partition member in which expansion of the partition member is suppressed. According to the present disclosure, it is also possible to provide a partition member and a structure which use the exterior material.

### Brief Description of Drawings

[Fig. 1] Fig. 1 is a schematic view illustrating an example of a cross-sectional structure of an exterior material for a partition member of the present disclosure.
[Fig. 2] Fig. 2 is a schematic view illustrating an example of the cross-sectional structure of the exterior material for a partition member of the present disclosure.
[Fig. 3] Fig. 3 is a schematic view illustrating an example of the cross-sectional structure of the exterior material for a partition member of the present disclosure.
[Fig. 4] Fig. 4 is a schematic view illustrating an example of the cross-sectional structure of the exterior material for a partition member of the present disclosure.
[Fig. 5] Fig. 5 is a schematic view illustrating an example of the cross-sectional structure of the exterior material for a partition member of the present disclosure.
[Fig. 6] Fig. 6 is a schematic view illustrating an example of a cross-sectional structure of a partition member of the present disclosure.
[Fig. 7] Fig. 7 is a schematic view illustrating an example of a cross-sectional structure of a structure of the present disclosure.
[Fig. 8] Fig. 8 is a schematic view for describing a method of housing a coolant in a packaging formed of the partition member of the present disclosure.

### Description of Embodiments

An exterior material for a partition member of the present disclosure is an exterior material for a partition member that is used for a partition member disposed between a plurality of heating elements, the exterior material for a partition member including a laminate including at least a metal layer and a heat-sealable resin layer, in which the metal layer includes a corrosion-resistant film on at least a surface on the heat-sealable resin layer side. Since the exterior material for a partition member of the present disclosure has the above configuration, expansion of the partition member can be suppressed.

Hereinafter, the exterior material for a partition member of the present disclosure will be described in detail. Note that, in the present specification, a numerical range indicated by "to" means "or more" and "or less". For example, the notation "2 to 15 mm" means 2 mm or more and 15 mm or less. In numerical ranges serially described in the present disclosure, an upper limit value or a lower limit value described for a numerical range may be replaced by an upper limit value or a lower limit value of one of other serially described numerical ranges. Upper limit values, upper and lower limit values, or lower limit values, which are described for different ranges, may be combined to form a numerical range. In numerical ranges described in the present disclosure, an upper limit value or a lower limit value described for a numerical range may be replaced by a value shown in an example.

Note that, in the exterior material for a partition member, Machine Direction (MD) and Transverse Direction (TD) in the process for manufacturing thereof can be usually discriminated from each other for a metal layer 1 described later. For example, in a case where the metal layer 1 is formed of an aluminum alloy foil or a stainless steel foil, linear streaks called rolling indentations are formed on the surface of the metal foil in a rolling direction (RD) of the metal foil. Since the rolling indentations extend along the rolling direction, the rolling direction of the metal foil can be known by observing the surface of the metal foil. In the manufacturing process of the laminate, the MD of the laminate and the RD of the metal foil normally coincide with each other, and thus the MD of the laminate can be specified by observing the surface of the metal foil of the laminate and specifying the rolling direction (RD) of the metal foil. Since the TD of the laminate is perpendicular to the MD of the laminate, the TD of the laminate can also be specified.

In a case where the MD of the exterior material for a partition member cannot be specified by the rolling indentations of the metal foil such as an aluminum alloy foil or a stainless steel foil, the MD can be specified by the following method. Examples of the method for confirming the MD of the exterior material for a partition member include a method in which a cross section of the heat-sealable resin layer of the exterior material for a partition member is observed with an electron microscope to confirm a sea-island structure. In this method, the direction parallel to a cross section in which the average of the diameters of the island shapes in a direction perpendicular to the thickness direction of the heat-sealable resin layer is maximum can be determined as MD. Specifically, a cross section in the length direction of the heat-sealable resin layer and cross sections (a total of 10 cross sections) at angular intervals of 10 degrees from a direction parallel to the cross section in the length direction to a direction perpendicular to the cross section in the length direction are observed with an electron microscope photograph to confirm sea-island structures. Next, in each cross section, the shape of each island is observed. For the shape of each island, the linear distance between the leftmost end in a direction perpendicular to the thickness direction of the heat-sealable resin layer and the rightmost end in the perpendicular direction is taken as a diameter y. In each cross section, the average of the top 20 diameters y in descending order of the diameter y of the island shape is calculated. The direction parallel to the cross section having the largest average of the diameters y of the island shapes is determined as MD.

### 1. Laminated structure of exterior material for partition member

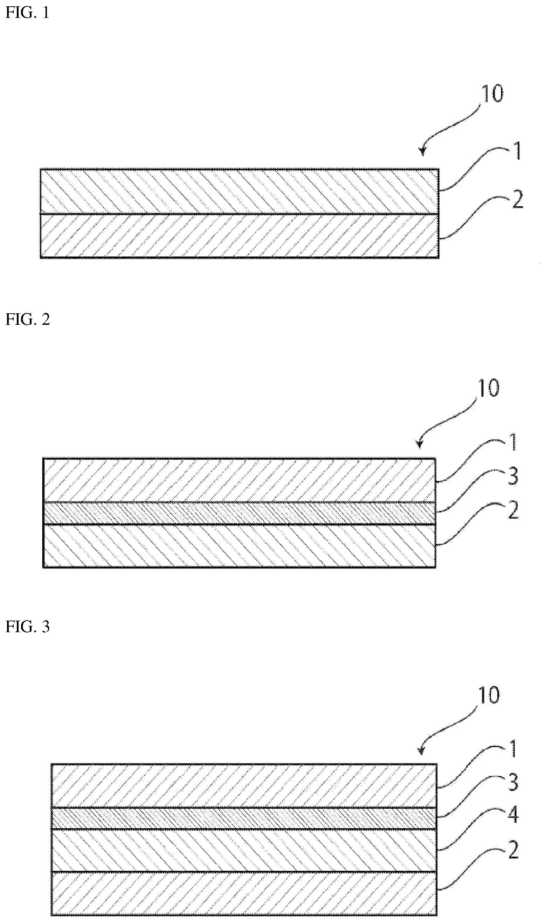

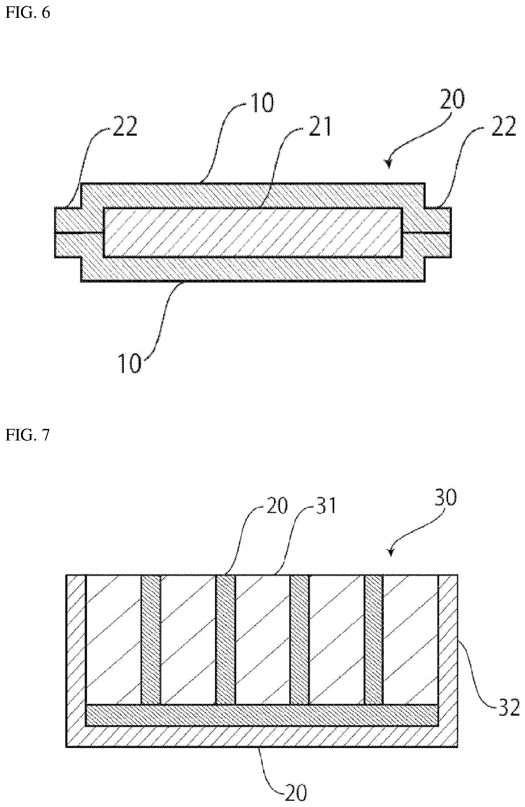

As illustrated in, for example, Figs. 1 to 5, an exterior material 10 for a partition member of the present disclosure includes a laminate including at least a metal layer 1 and a heat-sealable resin layer 2 in this order from the outside. In the exterior material 10 for a partition member, the heat-sealable resin layer 2 is an innermost layer. As illustrated in Fig. 6, in a partition member 20 of the present disclosure, contents (for example, a coolant 21) of the partition member 20 are housed in a space formed by heat-sealing the peripheral edge portions of the heat-sealable resin layers 2 of the exterior material 10 for a partition member which face each other. In the laminate constituting the exterior material 10 for a partition member of the present disclosure, with the metal layer 1 as a reference, the heat-sealable resin layer 2 is on the inner side with respect to the metal layer 1, and a side opposite to the metal layer 1 is an outer side.

The metal layer 1 includes a corrosion-resistant film on at least a surface on the heat-sealable resin layer 2 side. A corrosion-resistant film may be provided only on the surface of the metal layer 1 on the heat-sealable resin layer 2 side, or a corrosion-resistant film may be provided on both surfaces of the metal layer 1.

As illustrated, for example, Figs. 2 to 5, the exterior material 10 for a partition member may include an adhesive layer 3 as necessary between the metal layer 1 and the heat-sealable resin layer 2 (or a resin layer 4 or the like described later) for the purpose of, for example, enhancing bondability between these layers. The adhesive layer 3 is a layer that is in contact with the metal layer 1 inside the metal layer 1 and enhances an adhesive strength with a layer on the inner side with respect to the metal layer 1 (the heat-sealable resin layer 2, the resin layer 4, or the like).

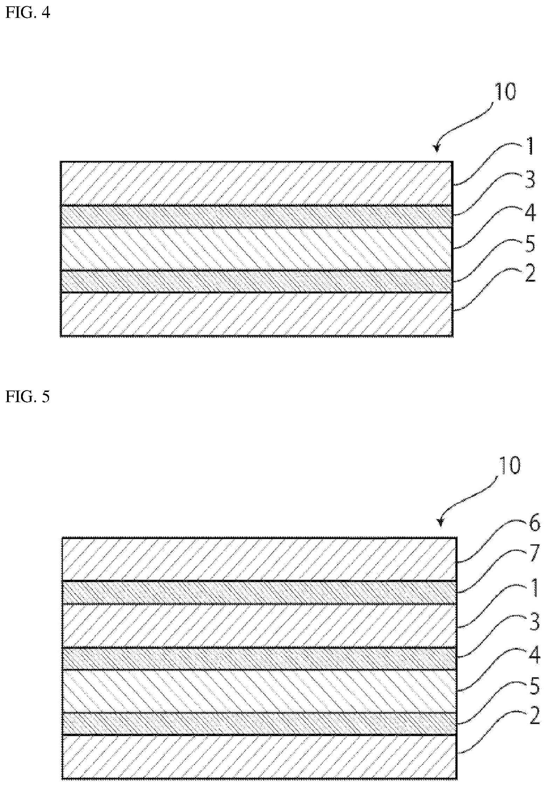

As illustrated, for example, Figs. 3 to 5, the exterior material 10 for a partition member may include the resin layer 4 between the metal layer 1 and the heat-sealable resin layer 2. As described above, the metal layer 1 and the resin layer 4 may be bonded via the adhesive layer 3. In a case where the resin layer 4 is provided, as illustrated in Fig. 3, the resin layer 4 and the heat-sealable resin layer 2 may be directly bonded to each other, or as illustrated in Figs. 4 and 5, the resin layer 4 and the heat-sealable resin layer 2 may be bonded to each other with an adhesive layer 5 interposed therebetween.

As illustrated, for example, Fig. 5, the exterior material 10 for a partition member may include a protective layer 6 on the outer side with respect to the metal layer 1. In a case where the protective layer 6 is provided, the protective layer 6 and the metal layer 1 may be directly bonded to each other (not illustrated), or as illustrated in Fig. 5, the protective layer 6 and the metal layer 1 may be bonded to each other with an adhesive layer 7 interposed therebetween.

The thickness of the laminate constituting the exterior material 10 for a partition member is not particularly limited, but is, for example, about 210 µm or less, and preferably about 190 µm or less, about 180 µm or less, about 155 µm or less, or about 120 µm or less from the viewpoint of cooling efficiency of the heating element, cost reduction, and the like. The thickness of the laminate constituting the exterior material 10 for a partition member is preferably about 35 µm or more, about 45 µm or more, or about 60 µm or more from the viewpoint of maintaining the function of the exterior material for a partition member to protect the contents. The laminate constituting the exterior material 10 for a partition member is preferably in a range of, for example, about 35 to 210 µm, about 35 to 190 µm, about 35 to 180 µm, about 35 to 155 µm, about 35 to 120 µm, about 45 to 210 µm, about 45 to 190 µm, about 45 to 180 µm, about 45 to 155 µm, about 45 to 120 µm, about 60 to 210 µm, about 60 to 190 µm, about 60 to 180 µm, about 60 to 155 µm, or about 60 to 120 µm.

In the exterior material 10 for a partition member, the ratio of the total thickness of the protective layer 6 provided as necessary, the adhesive layer 7 provided as necessary, the metal layer 1, the adhesive layer 3 provided as necessary, the resin layer 4 provided as necessary, the adhesive layer 5 provided as necessary, and the heat-sealable resin layer 2 to the thickness (total thickness) of the laminate constituting the exterior material 10 for a partition member is preferably 90% or more, more preferably 95% or more, and still more preferably 98% or more. As a specific example, in a case where the exterior material 10 for a partition member of the present disclosure includes the protective layer 6, the adhesive layer 7, the metal layer 1, the adhesive layer 3, and the heat-sealable resin layer 2, the ratio of the total thickness of these layers to the thickness (total thickness) of the laminate constituting the exterior material 10 for a partition member is preferably 90% or more, more preferably 95% or more, and still more preferably 98% or more. Also in a case where the exterior material 10 for a partition member of the present disclosure is a laminate including the protective layer 6, the adhesive layer 7, the metal layer 1, the adhesive layer 3, the resin layer 4, the adhesive layer 5, and the heat-sealable resin layer 2, the ratio of the total thickness of these layers to the thickness (total thickness) of the laminate constituting the exterior material 10 for a partition member can be, for example, 80% or more, preferably 90% or more, more preferably 95% or more, and still more preferably 98% or more.

In the exterior material 10 for a partition member of the present disclosure, the adhesion strength after storage in a moist and hot environment as measured by the following [Adhesion evaluation of exterior material] is preferably 1.0 N/15 mm or more, more preferably 1.5 N/15 mm or more, and still more preferably 2.0 N/15 mm or more, the upper limit thereof is, for example, preferably 15.0 N/15 mm or less, and a preferable range thereof is about 1.0 to 15.0 N/15 mm, about 1.5 to 15.0 N/15 mm, or about 2.0 to 15.0 N/15 mm.

In the exterior material 10 for a partition member of the present disclosure, the adhesion strength before storage in a moist and hot environment as measured by the following [Adhesion evaluation of exterior material] is preferably 1.0 N/15 mm or more, more preferably 1.5 N/15 mm or more, and still more preferably 2.0 N/15 mm or more, or 6.0 N/15 mm or more, the upper limit thereof is, for example, preferably 20.0 N/15 mm or less, 18.0 N/15 mm or less, and a preferable range thereof is about 1.0 to 20.0 N/15 mm, about 1.5 to 20.0 N/15 mm, about 2.0 to 20.0 N/15 mm, about 1.0 to 20.0 N/15 mm, about 1.0 to 18.0 N/15 mm, about 1.5 to 18.0 N/15 mm, or about 1.5 to 18.0 N/15 mm.

### [Adhesion evaluation of exterior material]

The exterior material for a partition member has a size of TD 100 mm × MD 150 mm. Using a PCT apparatus, the exterior material is stored in a moist and hot environment (temperature: 120°C, relative humidity: 100%, pressure: 0.199 MPa) for 16 days. The adhesion strength of the exterior material before and after storage is measured. The measurement point of the adhesion strength is an interface point between the metal layer and a layer on the heat-sealable resin layer side of the exterior material (a portion where the adhesive layer bonded to the metal layer is located). A specific method of measuring the adhesion strength is as follows. Each exterior material for a partition member is further cut into a rectangle of TD 15 mm × MD 100 mm to obtain a measurement sample. Next, the metal layer (aluminum alloy foil) of the measurement sample and the layer bonded to the metal layer with the adhesive layer interposed therebetween are partially T-shaped peeled off in the machine direction, the aluminum alloy foil side and the heat-sealable resin layer side are then fixed to a gripper of a tensile tester so that the machine direction is the tensile direction, and measurement is performed at a distance between chucks of 50 mm and a tensile speed of 100 mm/min to obtain the adhesion strength.

### 2. Each layer forming exterior material for partition member

### [Metal layer 1]

In the exterior material for a partition member, the metal layer 1 is a layer capable of exhibiting gas barrier performance against gases such as oxygen and water vapor. A plurality of metal layers 1 may be provided.

The metal layer 1 is a layer made of a metal material. Specific examples of the metal material constituting the metal layer 1 include metals such as aluminum, nickel, stainless steel, titanium steel, iron, and steel, and alloys containing these metals.

In the metal layer 1, the layer formed of the metal material described above may contain a recycled material of the metal material. Examples of the recycled material of the metal material include a recycled material of an aluminum alloy, stainless steel, titanium steel, or a steel plate. Each of these recycled materials can be obtained by a known method. The recycled material of the aluminum alloy can be obtained, for example, by the manufacturing method described in WO 2022/092231 A. The metal layer 1 may be formed of only a recycled material, or may be formed of a mixed material of a recycled material and a virgin material. Note that the recycled material of the metal material refers to a metal material obtained by collecting, isolating, purifying, and the like various products used in a so-called commercial market, wastes from manufacturing processes, and the like to make them reusable. The virgin material of the metal material is a new metal material refined from natural resources (raw materials) of metal, and is not a recycled material.

Examples of the metal layer 1 include a metal foil and a metal film which have a barrier property. The thickness of the metal film is not particularly limited as long as desired gas barrier performance can be exhibited, but is appropriately set according to the type of the metal film. For example, in a case where the metal film is an aluminum film, the thickness of the metal film is preferably 10 nm or more and 250 nm or less, more preferably 20 nm or more and 200 nm or less, and still more preferably 40 nm or more and 150 nm or less from the viewpoint of gas barrier properties, adhesion to a resin base material, and crack resistance.

The metal film is usually disposed so as to be in direct contact with a resin base material. The metal film may be, for example, a vapor deposition film or a coating film.

The resin base material is not particularly limited as long as it can support the metal film. Examples of the resin constituting the resin base material include polyolefin resins such as polyethylene (PE) and polypropylene (PP); polyester resins such as polyethylene terephthalate (PET), polyethylene naphthalate (PEN), and polybutylene terephthalate (PBT); cyclic polyolefin resins; polystyrene resins; acrylonitrile-styrene copolymer (AS resin); acrylonitrile-butadiene-styrene copolymer (ABS resin); poly(meth)acrylic resins; polycarbonate resins; polyvinyl alcohol-based resins such as polyvinyl alcohol (PVA) and ethylene-vinyl alcohol copolymer (EVOH); saponified product of ethylene-vinyl ester copolymer; various polyamide resins such as nylon; polyimide resins; polyurethane resins; acetal resins; and cellulose resins.

The resin base material may be subjected to a surface treatment. Adhesion with the metal film can be improved.

The thickness of the resin base material is not particularly limited, and can be appropriately set. The thickness of the resin base material may be, for example, 10 µm or more and 150 µm or less.

In a case where the metal layer 1 is a metal foil, an aluminum alloy foil, a stainless steel foil, or the like is preferable.

The aluminum alloy foil is more preferably, for example, a soft aluminum alloy foil composed of an annealed aluminum alloy or the like from the viewpoint of followability to the contents of the exterior material for a partition member, and is more preferably an iron-containing aluminum alloy foil from the viewpoint of followability to the contents. In the iron-containing aluminum alloy foil (100 mass%), the content of iron is preferably 0.1 to 9.0 mass%, and more preferably 0.5 to 2.0 mass%. When the content of iron is 0.1 mass% or more, an exterior material for a partition member having more excellent followability can be obtained. When the content of iron is 9.0 mass% or less, an exterior material for a partition member having more excellent flexibility can be obtained. Examples of the soft aluminum alloy foil include an aluminum alloy foil having a composition defined by JIS H4160:1994 A8021H-O, JIS H4160:1994 A8079H-O, JIS H4000:2014 A8021P-O, or JIS H4000:2014 A8079P-O. As necessary, silicon, magnesium, copper, manganese, or the like may be added. Softening can be performed by an annealing treatment or the like.

Examples of the stainless steel foil include austenitic stainless steel foils, ferritic stainless steel foils, austenitic/ferritic stainless steel foils, martensitic stainless steel foils, and precipitation-hardened stainless steel foils. From the viewpoint of providing an exterior material for a partition member which is further excellent in followability, the stainless steel foil is preferably formed of austenitic stainless steel.

Specific examples of the austenitic stainless steel constituting the stainless steel foil include SUS304, SUS301, and SUS316L, and among these, SUS304 is particularly preferable.

In the case of a metal foil, the thickness of the metal layer 1 may exhibit a function as a metal layer having gas barrier performance against gases such as oxygen and water vapor, and is, for example, about 6 to 200 µm. The thickness of the metal layer 1 is preferably about 85 µm or less, more preferably about 50 µm or less, still more preferably about 40 µm or less, and particularly preferably about 35 µm or less. The thickness of the metal layer 1 is preferably about 9 µm or more, and still more preferably about 10 µm or more. A preferable range of the thickness of the metal layer 1 is about 9 to 85 µm, about 9 to 50 µm, about 9 to 40 µm, about 9 to 35 µm, about 10 to 85 µm, about 10 to 50 µm, about 10 to 40 µm, or about 10 to 35 µm. In a case where the metal layer 1 is formed of an aluminum alloy foil, the above-mentioned range is particularly preferable. From the viewpoint of imparting high followability and high rigidity to the exterior material 10 for a partition member, the thickness of the metal layer 1 is preferably about 35 µm or more, more preferably about 45 µm or more, still more preferably about 50 µm or more, and still more preferably about 55 µm or more, and is preferably about 200 µm or less, more preferably about 85 µm or less, still more preferably about 75 µm or less, and still more preferably about 70 µm or less, and a preferable range thereof is about 35 to 200 µm, about 35 to 85 µm, about 35 to 75 µm, about 35 to 70 µm, about 45 to 200 µm, about 45 to 85 µm, about 45 to 75 µm, about 45 to 70 µm, about 50 to 200 µm, about 50 to 85 µm, about 50 to 75 µm, about 50 to 70 µm, about 55 to 200 µm, about 55 to 85 µm, about 55 to 75 µm, or about 55 to 70 µm. Since the exterior material 10 for a partition member has high followability, it is easy to follow the contents. The rigidity of the exterior material 10 for a partition member is increased, which can contribute to high sealability of contents. In particular, in a case where the metal layer 1 is formed of a stainless steel foil, the thickness of the stainless steel foil is preferably about 60 µm or less, more preferably about 50 µm or less, still more preferably about 40 µm or less, still more preferably about 30 µm or less, and particularly preferably about 25 µm or less. The thickness of the stainless steel foil is preferably about 10 µm or more, and more preferably about 15 µm or more. A preferable range of the thickness of the stainless steel foil is about 10 to 60 µm, about 10 to 50 µm, about 10 to 40 µm, about 10 to 30 µm, about 10 to 25 µm, about 15 to 60 µm, about 15 to 50 µm, about 15 to 40 µm, about 15 to 30 µm, about 15 to 25 µm.

### [Corrosion-resistant film]

The metal layer 1 includes a corrosion-resistant film on at least a surface on the heat-sealable resin layer 2 side. A corrosion-resistant film may be provided only on the surface of the metal layer 1 on the heat-sealable resin layer 2 side, or a corrosion-resistant film may be provided on both surfaces of the metal layer 1.

Here, the corrosion-resistant film refers to a thin film obtained by subjecting the surface of the metal layer to, for example, a hydrothermal denaturation treatment such as a boehmite treatment, a chemical conversion treatment, an anodization treatment, a plating treatment with nickel, chromium, or the like, a corrosion prevention treatment by applying a coating agent to impart corrosion resistance (for example, acid resistance, alkali resistance, and the like) to the metal layer. Specifically, the corrosion-resistant film means a film which improves the acid resistance of the metal layer (acid-resistant film), a film which improves the alkali resistance of the metal layer (alkali-resistant film), or the like. One of treatments for forming the corrosion-resistant film may be performed, or two or more thereof may be performed in combination. Not only one layer but also multiple layers can be formed. Of these treatments, the hydrothermal denaturation treatment and the anodization treatment are treatments in which the surface of the metal foil is dissolved with a treatment agent to form a metal compound excellent in corrosion resistance. Note that the definition of the chemical conversion treatment may include these treatments. In the present disclosure, the metal layer 1 is regarded as including the corrosion-resistant film.

The corrosion-resistant film exhibits the effects of preventing delamination between the metal layer 1 (for example, an aluminum alloy foil) and the layer adjacent on the heat-sealable resin layer 2 side (for example, the heat-sealable resin layer 2, the adhesive layer 3, the resin layer 4, or the like), preventing dissolution and corrosion of the surface of the metal layer 1, particularly dissolution and corrosion of aluminum oxide present on the surface of the metal layer in a case where the metal layer is an aluminum alloy foil, by moisture derived from the contents of the partition member, and improving the bondability (wettability) of the surface of the metal layer to prevent delamination between the metal layer and an adjacent layer.

Various corrosion-resistant films formed by a chemical conversion treatment are known, and examples thereof include mainly corrosion-resistant films containing at least one of a phosphate, a chromate, a fluoride, a triazine thiol compound, and a rare earth oxide. Examples of the chemical conversion treatment using a phosphate or a chromate include a chromic acid chromate treatment, a phosphoric acid chromate treatment, a phosphoric acid-chromate treatment, and a chromate treatment, and examples of the chromium compound used in these treatments include chromium nitrate, chromium fluoride, chromium sulfate, chromium acetate, chromium oxalate, chromium biphosphate, acetylacetate chromate, chromium chloride, and chromium potassium sulfate. Examples of the phosphorus compound used in these treatments include sodium phosphate, potassium phosphate, ammonium phosphate, and polyphosphoric acid. Examples of the chromate treatment include an etching chromate treatment, an electrolytic chromate treatment, and a coating-type chromate treatment, and a coating-type chromate treatment is preferable. This coating-type chromate treatment is a treatment in which at least a surface of the metal layer (for example, an aluminum alloy foil) on the inner layer side is first degreased by a well-known treatment method such as an alkali immersion method, an electrolytic cleaning method, an acid cleaning method, an electrolytic acid cleaning method, or an acid activation method, and a treatment liquid containing a metal phosphate such as Cr (chromium) phosphate, Ti (titanium) phosphate, Zr (zirconium) phosphate, or Zn (zinc) phosphate or a mixture of these metal salts as a main component, a treatment liquid containing non-metal salts of phosphoric acid and a mixture of these non-metal salts as a main component, or a treatment liquid formed of a mixture of these salts and a synthetic resin or the like is then applied to the degreased surface by a well-known coating method such as a roll coating method, a gravure printing method or an immersion method, and dried. As the treatment liquid, for example, various solvents such as water, an alcohol-based solvent, a hydrocarbon-based solvent, a ketone-based solvent, an ester-based solvent, and an ether-based solvent can be used, and water is preferable. Examples of the resin component used at this time include polymers such as phenol-based resins and acryl-based resins, and examples of the treatment include a chromate treatment using an aminated phenol polymer having any of repeating units represented by the following General Formulas (1) to (4). Note that, in the aminated phenol polymer, the repeating units represented by the following General Formulas (1) to (4) may be contained alone, or may be contained in any combination of two or more thereof. The acryl-based resin is preferably polyacrylic acid, an acrylic acid-methacrylic acid ester copolymer, an acrylic acid-maleic acid copolymer, an acrylic acid-styrene copolymer, or a derivative thereof such as a sodium salt, an ammonium salt, or an amine salt thereof. In particular, a derivative of polyacrylic acid such as an ammonium salt, a sodium salt, or an amine salt of polyacrylic acid is preferable In the present disclosure, the polyacrylic acid means a polymer of acrylic acid. The acryl-based resin is also preferably a copolymer of acrylic acid and dicarboxylic acid or dicarboxylic anhydride, and is also preferably an ammonium salt, a sodium salt, or an amine salt of a copolymer of acrylic acid and dicarboxylic acid or dicarboxylic anhydride. The acryl-based resin may be used singly or as a mixture of two or more kinds thereof.

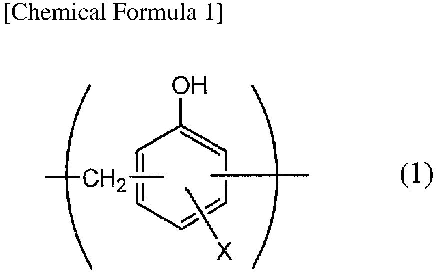

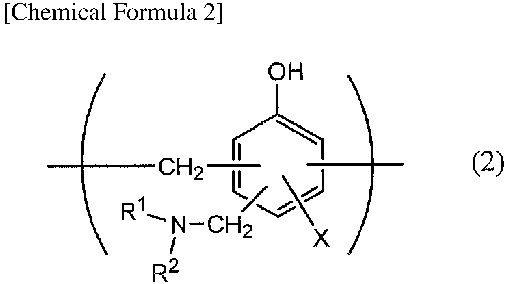

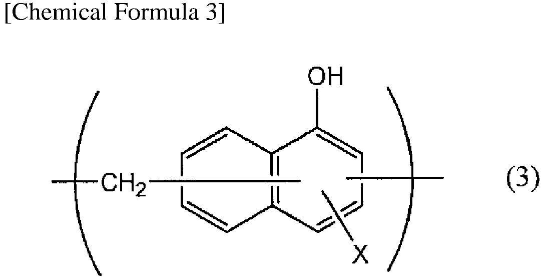

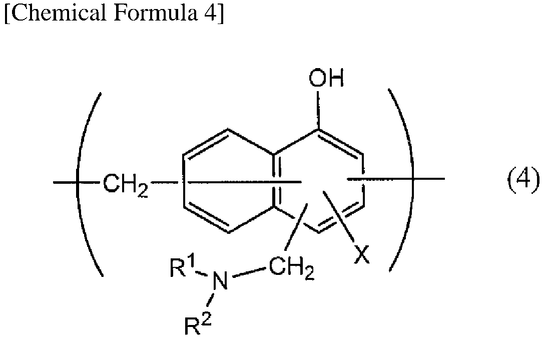

In General Formulas (1) to (4), X represents a hydrogen atom, a hydroxy group, an alkyl group, a hydroxyalkyl group, an allyl group, or a benzyl group. R¹ and R² are the same as or different from each other, and each represents a hydroxy group, an alkyl group, or a hydroxyalkyl group. In General Formulas (1) to (4), examples of the alkyl group represented by X, R¹, and R² include linear or branched alkyl groups having 1 to 4 carbon atoms, such as a methyl group, an ethyl group, an n-propyl group, an isopropyl group, an n-butyl group, an isobutyl group, and a tert-butyl group. Examples of the hydroxyalkyl group represented by X, R¹, and R² include a linear or branched alkyl group having 1 to 4 carbon atoms, which is substituted with one hydroxy group, such as a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group, and a 4-hydroxybutyl group. In General Formulas (1) to (4), the alkyl group and the hydroxyalkyl group represented by X, R¹, and R² may be the same as or different from each other. In General Formulas (1) to (4), X is preferably a hydrogen atom, a hydroxy group, or a hydroxyalkyl group. The number average molecular weight of the aminated phenol polymer having repeating units represented by General Formulas (1) to (4) is, for example, preferably about 500 to 1000000, and more preferably about 1000 to 20000. The aminated phenol polymer is produced by, for example, performing polycondensation of a phenol compound or a naphthol compound with formaldehyde to produce a polymer including repeating units represented by the above General Formula (1) or General Formula (3), and then introducing a functional group (-CH₂NR¹R²) into the obtained polymer using formaldehyde and an amine (R¹R²NH). The aminated phenol polymer may be used singly or as a mixture of two or more kinds thereof.

Other examples of the corrosion-resistant film include thin films formed by a corrosion prevention treatment of coating type in which a coating agent containing at least one selected from the group consisting of a rare earth element oxide sol, an anionic polymer, and a cationic polymer is applied. The coating agent may further contain phosphoric acid or a phosphate, and a crosslinking agent for crosslinking the polymer. In the rare earth element oxide sol, fine particles of a rare earth element oxide (for example, particles having an average particle size of 100 nm or less) are dispersed in a liquid dispersion medium. Examples of the rare earth element oxide include cerium oxide, yttrium oxide, neodymium oxide, and lanthanum oxide, and cerium oxide is preferable from the viewpoint of further improving adhesion. The rare earth element oxide contained in the corrosion-resistant film can be used singly or in combination of two or more kinds thereof. As the liquid dispersion medium for the rare earth element oxide sol, for example, various solvents such as water, an alcohol-based solvent, a hydrocarbon-based solvent, a ketone-based solvent, an ester-based solvent, and an ether-based solvent can be used, and water is preferable. For example, the cationic polymer is preferably polyethyleneimine, an ion polymer complex formed of polyethyleneimine and a polymer having a carboxylic acid, primary amine-grafted acrylic resins obtained by graft-polymerizing a primary amine with an acrylic main backbone, polyallylamine or a derivative thereof, aminated phenol, or the like. The anionic polymer is preferably poly(meth)acrylic acid or a salt thereof, or a copolymer containing (meth)acrylic acid or a salt thereof as a main component. The crosslinking agent is preferably at least one selected from the group consisting of a compound having any functional group of an isocyanate group, a glycidyl group, a carboxyl group, and an oxazoline group, and a silane coupling agent. The phosphoric acid or phosphate is preferably condensed phosphoric acid or a condensed phosphate.

Examples of the corrosion-resistant film include films formed by applying a dispersion of fine particles of a metal oxide, such as aluminum oxide, titanium oxide, cerium oxide, or tin oxide, or barium sulfate in phosphoric acid to the surface of the metal layer and performing a baking treatment at 150°C or higher.

The corrosion-resistant film may have a laminated structure in which at least one of a cationic polymer and an anionic polymer is further layered as necessary. Examples of the cationic polymer and the anionic polymer include those described above.

Note that the composition of the corrosion-resistant film can be analyzed by, for example, time-of-flight secondary ion mass spectrometry. As described later, in the present disclosure, X-ray photoelectron spectroscopy is used to detect Cr, Zr, and the like in the corrosion-resistant film.

From the viewpoint of more suitably exhibiting the effect of the present disclosure, the corrosion-resistant film formed on the surface of the metal layer 1 on the heat-sealable resin layer 2 side is preferably detected to have an atomic composition ratio of Cr or Zr of 0.1 at% or more, more preferably 0.3 at% or more, and still more preferably 1.0 at% or more by X-ray photoelectron spectroscopy. The upper limit of the atomic composition ratio of Cr or Zr is, for example, 20 at% or less, more preferably 15 at% or less, and still more preferably 10 at% or less, and a preferable range of the atomic composition ratio is about 0.1 to 20 at%, about 0.1 to 15 at%, about 0.1 to 10 at%, about 0.3 to 20 at%, about 0.3 to 15 at%, about 0.3 to 10 at%, about 1.0 to 20 at%, about 1.0 to 15 at%, or about 1.0 to 10 at%. The atomic composition ratio of Cr or Zr refers to the atomic number ratio of Cr or Zr atoms when the total number of atoms of C atoms, N atoms, O atoms, F atoms, Al atoms, Si atoms, P atoms, S atoms, Cr atoms, and Zr atoms on the surface of the corrosion-resistant film is 100 at% as measured by X-ray photoelectron spectroscopy (XPS). In the chemical conversion treatment described above, for example, in a case where a corrosion-resistant film is formed using a treatment liquid containing Cr (chromium) phosphate or Zr (zirconium) phosphate as a main component, a corrosion-resistant film in which Cr or Zr is detected at 0.1 at% or more can be formed. In a case where the corrosion-resistant film is also formed on the surface of the metal layer 1 on a side opposite to the heat-sealable resin layer 2 side, the atomic composition ratio of Cr or Zr by X-ray photoelectron spectroscopy is preferably in those atomic composition ratios. XPS analysis of the corrosion-resistant film formed on the surface of the metal layer is performed under the following conditions.

### [XPS analysis of corrosion-resistant film]

X-ray photoelectron spectroscopy (XPS analysis) is performed on each of the surfaces of the corrosion-resistant films formed on the surface of the metal layer under the following measurement conditions to measure the atomic composition ratio (at%) of each element.

### <Measurement conditions>

- Equipment used: scanning X-ray photoelectron spectrometer
- Spectrum sampling conditions
   Incident X-rays: AlKα (monochromatic X-rays, hν = 1486.6 eV)
   X-ray output: 50 W (15 kV·3.3 mA)
   X-ray beam diameter: 200 µmφ
   X-ray scanning: 700 µm × 200 µm (surface XPS analysis)
   Photoelectron capture angle: 45 degrees
   Charge neutralization: electron neutralization gun, low acceleration ion irradiation
- Low-speed electron irradiation condition... emission 10 µA, bias potential 1.0 V
- Low acceleration ion irradiation condition...ion species Ar+, acceleration voltage 0.11 kV, emission 7 mA

Note that, in the corrosion-resistant film formed on the surface of the metal layer 1, examples of elements to be detected other than Cr and Zr include elements such as C, N, and O, and elements such as F, Al, Si, P, and S may be further detected.

The amount of the corrosion-resistant film to be formed on the surface of the metal layer 1 in the chemical conversion treatment is not particularly limited, but for example, in the case of performing a coating-type chromate treatment, it is desirable that the chromic acid compound is contained in an amount of, for example, about 0.5 to 50 mg, preferably about 1.0 to 40 mg, in terms of chromium, the phosphorus compound is contained in an amount of, for example, about 0.5 to 50 mg, preferably about 1.0 to 40 mg in terms of phosphorus, and the aminated phenol polymer is contained in an amount of, for example, about 1.0 to 200 mg, preferably about 5.0 to 150 mg, per 1 m² of the surface of the metal layer 1.

The thickness of the corrosion-resistant film is not particularly limited, but from the viewpoint of the cohesive force of the film and the adhesive strength with the metal layer and the heat-sealable resin layer, the thickness thereof is preferably 1 nm or more, more preferably 5 nm or more, and still more preferably 10 nm or more, and is preferably 100 nm or less, more preferably 50 nm or less, and still more preferably 40 nm or less, and a preferable range thereof is about 1 to 100 nm, about 1 to 50 nm, about 1 to 40 nm, about 5 to 100 nm, about 5 to 50 nm, about 5 to 40 nm, about 10 to 100 nm, about 10 to 50 nm, or about 10 to 40 nm. Note that the thickness of the corrosion-resistant film can be measured by observation with a transmission electron microscope or a combination of observation with a transmission electron microscope and energy dispersive X-ray spectroscopy or electron beam energy loss spectroscopy. By analyzing the composition of the corrosion-resistant film using time-of-flight secondary ion mass spectrometry, peaks derived from secondary ions from, for example, Cr, P, and O (for example, at least one of CrPO₂⁺, CrPO₄⁻, and the like) are detected.

The chemical conversion treatment is performed by applying a solution containing a compound to be used for formation of the corrosion-resistant film to the surface of the metal layer by a bar coating method, a roll coating method, a gravure coating method, an immersion method, or the like, and then performing heating so that the temperature of the metal layer is about 70 to 200°C. The metal layer may be subjected to a degreasing treatment by an alkali immersion method, an electrolytic cleaning method, an acid cleaning method, an electrolytic acid cleaning method, or the like in advance before the metal layer is subjected to a chemical conversion treatment. By performing the degreasing treatment in this manner, the chemical conversion treatment of the surface of the metal layer can be more efficiently performed. By using an acid degreasing agent with a fluorine-containing compound dissolved in an inorganic acid for the degreasing treatment, not only a metal foil degreasing effect can be obtained but also a metal fluoride can be formed as a passive state, and in this case, only degreasing treatment may be performed.

### [Heat-sealable resin layer 2]

In the exterior material for a partition member of the present disclosure, the heat-sealable resin layer 2 corresponds to the innermost layer. The heat-sealable resin layer 2 is a layer (sealant layer) which exerts a function of hermetically sealing the contents (for example, a coolant) by heat-sealing the heat-sealable resin layers 2 with each other when the partition member is produced using the exterior material for a partition member of the present disclosure. When the contents (for example, the coolant) of the partition member are sealed using the exterior material for a partition member, the heat-sealable resin layer 2 is in contact with the contents of the partition member, and is bonded at the end parts of the exterior materials for a partition member facing each other.

The resin constituting the heat-sealable resin layer 2 is not particularly limited as long as it can be heat-sealed, but is preferably a resin containing a polyolefin backbone such as a polyolefin or an acid-modified polyolefin. The resin constituting the heat-sealable resin layer 2 can be confirmed to contain a polyolefin backbone by an analysis method such as infrared spectroscopy or gas chromatography-mass spectrometry. It is preferable that a peak derived from maleic anhydride is detected when the resin constituting the heat-sealable resin layer 2 is analyzed by infrared spectroscopy. For example, when a maleic anhydride-modified polyolefin is measured by infrared spectroscopy, peaks derived from maleic anhydride are detected near wavenumbers of 1760 cm⁻¹ and 1780 cm⁻¹. In a case where the heat-sealable resin layer 2 is a layer formed of a maleic anhydride-modified polyolefin, a peak derived from maleic anhydride is detected when measurement is performed by infrared spectroscopy. However, when the degree of acid modification is low, the peaks may be too small to be detected. In that case, the peaks can be analyzed by nuclear magnetic resonance spectroscopy.

The heat-sealable resin layer 2 preferably contains a resin containing a polyolefin backbone as a main component, more preferably contains a polyolefin as a main component, and still more preferably contains a polypropylene as a main component. Here, the main component means a resin component having a content of, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, and still more preferably 99 mass% or more among the resin components contained in the heat-sealable resin layer 2. For example, the fact that the heat-sealable resin layer 2 contains a polypropylene as a main component means that the content ratio of the polypropylene among the resin components contained in the heat-sealable resin layer 2 is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, and still more preferably 99 mass% or more.

Specific examples of the polyolefin include polyethylenes such as low-density polyethylene, medium-density polyethylene, high-density polyethylene, and linear low-density polyethylene; ethylene-α-olefin copolymers; polypropylene such as homopolypropylene, block copolymers of polypropylene (for example, block copolymers of propylene and ethylene), and random copolymers of polypropylene (for example, random copolymers of propylene and ethylene); propylene-α-olefin copolymers; and terpolymers of ethylene-butene-propylene. Among them, polypropylene is preferable. The polyolefin resin in the case of a copolymer may be a block copolymer or a random copolymer. These polyolefin-based resins may be used singly or in combination of two or more kinds thereof.

The polyolefin may be a cyclic polyolefin. The cyclic polyolefin is a copolymer of an olefin and a cyclic monomer, and examples of the olefin as a constituent monomer of the cyclic polyolefin include ethylene, propylene, 4-methyl-1-pentene, styrene, butadiene, and isoprene. Examples of the cyclic monomer as a constituent monomer of the cyclic polyolefin include cyclic alkenes such as norbornene; and cyclic dienes such as cyclopentadiene, dicyclopentadiene, cyclohexadiene, and norbornadiene. Among them, cyclic alkenes are preferable, and norbornene is more preferable.

The polyolefin may be an acid-modified polyolefin. The acid-modified polyolefin is a polymer obtained by modifying a polyolefin by block polymerization or graft polymerization with an acid component. As the polyolefin to be acid-modified, the above-mentioned polyolefins, copolymers obtained by copolymerizing polar molecules such as acrylic acid or methacrylic acid with the above-mentioned polyolefins, polymers such as crosslinked polyolefins, or the like can also be used. Examples of the acid component to be used for acid modification include carboxylic acids such as maleic acid, acrylic acid, itaconic acid, crotonic acid, maleic anhydride, and itaconic anhydride, and anhydrides thereof.

The acid-modified polyolefin may be an acid-modified cyclic polyolefin. The acid-modified cyclic polyolefin is a polymer obtained by replacing a part of monomers forming the cyclic polyolefin with an acid component and performing copolymerization, or block-polymerizing or graft-polymerizing an acid component with the cyclic polyolefin. The cyclic polyolefin to be modified with an acid is the same as described above. The acid component to be used for acid modification is the same as the acid component used for modification of the polyolefin.

Preferred examples of the acid-modified polyolefin include polyolefins modified with a carboxylic acid or an anhydride thereof, polypropylene modified with a carboxylic acid or an anhydride thereof, maleic anhydride-modified polyolefins, and maleic anhydride-modified polypropylene.

The heat-sealable resin layer 2 may be formed from one resin alone, or may be formed from a blend polymer obtained by combining two or more resins. The heat-sealable resin layer 2 may be formed of only one layer, or may be formed of two or more layers of the same or different resins.

When the exterior material 10 for a partition member of the present disclosure is manufactured by layering the heat-sealable resin layer 2 on the metal layer 1, the adhesive layer 3, and the like, a resin film formed in advance may be used as the heat-sealable resin layer 2. A heat-sealable resin that forms the heat-sealable resin layer 2 may be formed into a film on the surface of the metal layer 1, the adhesive layer 3, or the like by extrusion molding, coating, or the like to form the heat-sealable resin layer 2 formed of a resin film.

The heat-sealable resin layer 2 may contain additives such as an anti-blocking agent, a slipping agent, a flame retardant, and a filler.

The melting point of the heat-sealable resin layer 2 depends on the material, but is, for example, preferably 120°C or higher, more preferably 130°C or higher, and still more preferably 140°C or higher. Here, in a structure in which the partition member is disposed between a plurality of heating elements, when any of the heating elements abnormally generates heat, the heat is released from the heating element, so that the temperature of the partition member located in the vicinity of the heating element increases. At this time, when the temperature of the partition member exceeds the melting point of the heat-sealable resin layer, the heat-sealable resin layer is melted, and the seal portion of the exterior material for a partition member is easily delaminated. As the temperature of the partition member rises, the temperature of the contents (for example, a coolant containing water) enclosed in the partition member rises, so that the vapor pressure of the contents rises, and the internal pressure of the partition member rises. At this time, when the internal pressure of the partition member exceeds the welding strength of the heat-sealable resin layer at the seal portion of the exterior material for a partition member, the seal portion of the exterior material for a partition member is easily delaminated. As described later, the coolant preferably contains water. Therefore, when the melting point of the heat-sealable resin layer is in the above range, it is possible to suppress delamination of the seal portion of the exterior material for a partition member in a normal state in the structure.

On the other hand, the melting point of the heat-sealable resin layer is, for example, preferably 250°C or lower, more preferably 200°C or lower, and still more preferably 170°C or lower. When the melting point of the heat-sealable resin layer is in the above range, the seal portion of the exterior material for a partition member is easily delaminated at the time of abnormal heat generation in the structure. The seal portion of the exterior material for a partition member is delaminated, and the coolant is released from the partition member, whereby the abnormal heating element can be cooled. As a result, thermal runaway can be suppressed.

Here, the melting point of the heat-sealable resin layer is measured by the following method using a differential scanning calorimeter (DSC). First, the heat-sealable resin layer is delaminated from the exterior material for a partition member to obtain about 10 mg of a sample. This sample is placed in an aluminum cell, heated from 20°C to 300°C at a temperature increase rate of 10°C/min in a nitrogen atmosphere using a differential scanning calorimeter, and held at this temperature for 10 minutes. The temperature is cooled to 20°C at a temperature decrease rate of 10°C/min, the cooled temperature was kept for 10 minutes, and then the temperature was raised again to 300°C at a temperature increase rate of 10°C/min (second temperature increase). The intersection between the tangent at the melting point observed in the second temperature increase and the baseline of the DSC curve on the lower-temperature side of the melting point is defined as the melting point of the heat-sealable resin layer.

The heat-sealable resin layer 2 may contain additives such as a slipping agent, an anti-blocking agent, a slipping agent, a flame retardant, and a filler as necessary. In a case where the heat-sealable resin layer 2 contains a slipping agent, the followability of the exterior material for a partition member can be enhanced. The slipping agent is not particularly limited, and a known slipping agent can be used.

The slipping agent is not particularly limited, but an amide-based slipping agent is preferable. Specific examples of the slipping agent include those exemplified for the protective layer 6. The slipping agent may be used singly or in combination of two or more kinds thereof, and it is preferable to use a combination of two or more kinds thereof.

In the present disclosure, from the viewpoint of enhancing the followability of the exterior material for a partition member, it is preferable that a slipping agent is present on at least one of the surface and the inside of the heat-sealable resin layer 2. The slipping agent is not particularly limited, but an amide-based slipping agent is preferable. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amides include lauric acid amide, palmitic acid amide, stearic acid amide, behenic acid amide, and hydroxystearic acid amide. Specific examples of the unsaturated fatty acid amides include oleic acid amide and erucic acid amide. Specific examples of the substituted amides include N-oleyl palmitic acid amide, N-stearyl stearic acid amide, N-stearyl oleic acid amide, N-oleyl stearic acid amide, and N-stearyl erucic acid amide. Specific examples of the methylol amides include methylol stearic acid amide. Specific examples of the saturated fatty acid bisamides include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenebisbehenic acid amide, hexamethylenehydroxystearic acid amide, N,N'-distearyl adipic acid amide, and N,N'-distearyl sebacic acid amide. Specific examples of the unsaturated fatty acid bisamides include ethylenebisoleic acid amide, ethylenebiserucic acid amide, hexamethylenebisoleic acid amide, N,N'-dioleyl adipic acid amide, and N,N'-dioleyl sebacic acid amide. Specific examples of the fatty acid ester amides include stearamide ethyl stearate. Specific examples of the aromatic bisamides include m-xylylenebisstearic acid amide, m-xylylenebishydroxystearic acid amide, and N,N'-distearylisophthalic acid amide. The slipping agent may be used singly or in combination of two or more kinds thereof, and it is preferable to use a combination of two or more kinds thereof.

In a case where the slipping agent is present on the surface of the heat-sealable resin layer 2, the amount of the slipping agent present is not particularly limited, but from the viewpoint of enhancing the followability of the exterior material for a partition member, the amount thereof is preferably about 1 mg/m² or more, more preferably about 3 mg/m² or more, still more preferably about 5 mg/m² or more, still more preferably about 10 mg/m² or more, and still more preferably about 15 mg/m² or more, and is preferably about 50 mg/m² or less, and still more preferably about 40 mg/m² or less, and a preferable range thereof is about 1 to 50 mg/m², about 1 to 40 mg/m², about 3 to 50 mg/m², about 3 to 40 mg/m², about 5 to 50 mg/m², about 5 to 40 mg/m², about 10 to 50 mg/m², about 10 to 40 mg/m², about 15 to 50 mg/m², or about 15 to 40 mg/m².

In a case where the slipping agent is present inside the heat-sealable resin layer 2, the amount of the slipping agent present is not particularly limited, but from the viewpoint of enhancing the followability of the exterior material for a partition member, the amount thereof is preferably about 100 ppm or more, more preferably about 300 ppm or more, and still more preferably about 500 ppm or more, and is preferably about 3000 ppm or less, and more preferably about 2000 ppm or less, and a preferable range thereof is about 100 to 3000 ppm, about 100 to 2000 ppm, about 300 to 3000 ppm, about 300 to 2000 ppm, about 500 to 3000 ppm, or about 500 to 2000 ppm. In a case where two or more kinds of slipping agents are present inside the heat-sealable resin layer 2, the amount of the slipping agent is the total amount of slipping agents. In a case where two or more kinds of slipping agents are present inside the heat-sealable resin layer 2, the amount of the first kind of slipping agent present is not particularly limited, but from the viewpoint of enhancing the followability of the exterior material for a partition member, the amount thereof is preferably about 100 ppm or more, more preferably about 300 ppm or more, and still more preferably about 500 ppm or more, and is preferably about 3000 ppm or less, and more preferably about 2000 ppm or less, and a preferable range thereof is about 100 to 3000 ppm, about 100 to 2000 ppm, about 300 to 3000 ppm, about 300 to 2000 ppm, about 500 to 3000 ppm, or about 500 to 2000 ppm. The amount of the second kind of slipping agent present is not particularly limited, but from the viewpoint of enhancing the followability of the exterior material for a partition member, the amount thereof is preferably about 50 ppm or more, more preferably about 100 ppm or more, and still more preferably about 200 ppm or more, and is preferably about 1500 ppm or less, and more preferably about 1000 ppm or less, and a preferable range thereof is about 50 to 1500 ppm, about 50 to 1000 ppm, about 100 to 1500 ppm, about 100 to 1000 ppm, about 200 to 1500 ppm, or about 200 to 1000 ppm.

The slipping agent present on the surface of the heat-sealable resin layer 2 may be one obtained by exuding the slipping agent contained in the resin constituting the heat-sealable resin layer 2, or one obtained by applying the slipping agent to the surface of the heat-sealable resin layer 2.

The thickness of the heat-sealable resin layer 2 is not particularly limited as long as a function of hermetically sealing the contents by heat-sealing the heat-sealable resin layers with each other is exhibited, but is, for example, about 100 µm or less, preferably about 85 µm or less, and more preferably about 15 to 85 µm. Note that, for example, in a case where the thickness of the adhesive layer 5 described later is 10 µm or more, the thickness of the heat-sealable resin layer 2 is preferably about 85 µm or less, and more preferably about 15 to 45 µm, and for example, in a case where the thickness of the adhesive layer 5 described later is less than 10 µm or the adhesive layer 5 is not provided, the thickness of the heat-sealable resin layer 2 is preferably about 20 µm or more, and more preferably about 35 to 85 µm.

### [Adhesive layer 3]

For example, as illustrated in Figs. 2 to 5, the exterior material 10 for a partition member of the present disclosure may include the adhesive layer 3 between the metal layer 1 and the heat-sealable resin layer 2 as necessary. The adhesive layer 3 is a layer that is in contact with the metal layer 1 inside the metal layer 1 and enhances an adhesive strength between a layer on the inner side with respect to the metal layer 1 (the heat-sealable resin layer 2, the resin layer 4, or the like) and the metal layer 1. In a case where the resin layer 4 described later is provided between the metal layer 1 and the heat-sealable resin layer 2, the adhesive layer 3 is provided between the metal layer 1 and the resin layer 4 to bond these layers.

The adhesive layer 3 is formed of an adhesive capable of bonding the metal layer 1 and a layer adjacent thereto. The adhesive to be used for forming the adhesive layer 3 is not limited, and may be any of a chemical reaction type, a solvent volatilization type, a heat melting type, a heat pressing type, and the like. The adhesive may be a two-liquid curable adhesive (two-liquid adhesive), a one-liquid curable adhesive (one-liquid adhesive), or a resin that does not involve a curing reaction. The adhesive layer 3 may be a single layer or a multi-layer.

Specific examples of the adhesive component contained in the adhesive include polyesters such as polyethylene terephthalate, polybutylene terephthalate, polyethylene naphthalate, polybutylene naphthalate, polyethylene isophthalate, and copolymerized polyester; polyether; polyurethane; epoxy resins; phenol resins; polyamides such as nylon 6, nylon 66, nylon 12, and copolymerized polyamide; polyolefin-based resins such as polyolefins, cyclic polyolefins, acid-modified polyolefins, and acid-modified cyclic polyolefins; polyvinyl acetate; cellulose; (meth)acrylic resins; polyimide; polycarbonate; amino resins such as urea resins and melamine resins; rubbers such as chloroprene rubber, nitrile rubber, and styrene-butadiene rubber; and silicone resins. These adhesive components may be used singly or in combination of two or more kinds thereof. Among these adhesive components, a polyolefin-based adhesive, a polyurethane adhesive, and the like are preferable, and a polyolefin-based adhesive is particularly preferable. The adhesive strength of these resins used as adhesive components can be increased by using an appropriate curing agent in combination. The curing agent is appropriately selected from polyisocyanate, a polyfunctional epoxy resin, an oxazoline group-containing polymer, a polyamine resin, an acid anhydride, and the like according to the functional group of the adhesive component.

In the present disclosure, from the viewpoint of further firmly bonding the metal layer 1 and a layer adjacent thereto (for example, enhancing the adhesive strength in a moist and hot environment), a resin to be used for forming the adhesive layer 3 preferably contains a polyolefin backbone. That is, the adhesive layer 3 is particularly preferably formed of a polyolefin-based adhesive.

Examples of the resin containing a polyolefin backbone in the adhesive layer 3 include the polyolefins, acid-modified polyolefins, cyclic polyolefins, and acid-modified cyclic polyolefins exemplified in the heat-sealable resin layer 2 described above. Meanwhile, from the viewpoint of firmly bonding the metal layer 1 and the layer adjacent thereto, the adhesive layer 3 preferably contains an acid-modified polyolefin. Examples of the acid modifying component include dicarboxylic acids such as maleic acid, itaconic acid, succinic acid, and adipic acid, anhydrides thereof, acrylic acid, and methacrylic acid, and maleic anhydride is most preferable from the viewpoint of ease of modification, general-purpose property, and the like. From the viewpoint of the heat resistance of the exterior material for a partition member, the olefin component is preferably a polypropylene-based resin, and the adhesive layer 3 most preferably contains maleic anhydride-modified polypropylene.

In a case where the resin to be used for forming the adhesive layer 3 contains a polyolefin backbone, the adhesive layer 3 preferably contains a resin containing a polyolefin backbone as a main component, more preferably contains an acid-modified polyolefin as a main component, and still more preferably contains an acid-modified polypropylene as a main component. Here, the main component means a resin component having a content of, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, and still more preferably 99 mass% or more among the resin components contained in the adhesive layer 3. For example, the fact that the adhesive layer 3 contains an acid-modified polypropylene as a main component means that the content ratio of the acid-modified polypropylene among the resin components contained in the adhesive layer 3 is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, and still more preferably 99 mass% or more.

The resin constituting the adhesive layer 3 can be confirmed to contain a polyolefin backbone by an analysis method such as infrared spectroscopy or gas chromatography-mass spectrometry, and the analysis method is not particularly limited. In a case where the resin constituting the adhesive layer 3 contains an acid-modified polyolefin, for example, when a maleic anhydride-modified polyolefin is measured by infrared spectroscopy, peaks derived from maleic anhydride are detected near wavenumbers of 1760 cm⁻¹ and 1780 cm⁻¹. However, when the degree of acid modification is low, the peaks may be too small to be detected. In that case, the peaks can be analyzed by nuclear magnetic resonance spectroscopy.

From the viewpoint of securing durability, such as heat resistance and content resistance and securing followability, of the exterior material for a partition member while reducing the thickness, the adhesive layer 3 is more preferably a cured product of a resin composition containing an acid-modified polyolefin and a curing agent. Preferred examples of the acid-modified polyolefin include those described above.

The adhesive layer 3 is preferably a cured product of a resin composition containing an acid-modified polyolefin and at least one selected from the group consisting of a compound having an isocyanate group, a compound having an oxazoline group, and a compound having an epoxy group, and is particularly preferably a cured product of a resin composition containing an acid-modified polyolefin and at least one selected from the group consisting of a compound having an isocyanate group and a compound having an epoxy group. The adhesive layer 3 preferably contains at least one selected from the group consisting of polyurethane, polyester, and epoxy resin, and more preferably contains polyurethane and epoxy resin. As the polyester, for example, an ester resin produced by reaction of an epoxy group with a maleic anhydride group, or an amide ester resin produced by reaction of an oxazoline group with a maleic anhydride group is preferable. Note that, in a case where an unreacted substance of a curing agent such as a compound having an isocyanate group, a compound having an oxazoline group, or an epoxy resin remains in the adhesive layer 3, the presence of the unreacted substance can be confirmed by, for example, a method selected from infrared spectroscopy, Raman spectroscopy, time-of-flight secondary ion mass spectrometry (TOF-SIMS), and the like.

From the viewpoint of further enhancing the adhesion between the metal layer 1 and the adhesive layer 3, the adhesive layer 3 is a cured product of a resin composition containing a curing agent having at least one selected from the group consisting of an oxygen atom, a heterocyclic ring, a C=N bond, and a C-O-C bond. Examples of the curing agent having a heterocyclic ring include a curing agent having an oxazoline group and a curing agent having an epoxy group. Examples of the curing agent having a C=N bond include a curing agent having an oxazoline group and a curing agent having an isocyanate group. Examples of the curing agent having a C-O-C bond include a curing agent having an oxazoline group and a curing agent having an epoxy group. Whether the adhesive layer 3 is a cured product of a resin composition containing any of these curing agents can be confirmed by, for example, a method such as gas chromatography-mass spectrometry (GCMS), infrared spectroscopy (IR), time-of-flight secondary ion mass spectrometry (TOF-SIMS), or X-ray photoelectron spectroscopy (XPS).

The compound having an isocyanate group is not particularly limited, but a polyfunctional isocyanate compound is preferable from the viewpoint of effectively enhancing the adhesion between the metal layer 1 and the adhesive layer 3. The polyfunctional isocyanate compound is not particularly limited as long as it is a compound having two or more isocyanate groups. Examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers thereof with other polymers. Examples thereof include adduct forms, biuret forms, and isocyanurate forms.

The content of the compound having an isocyanate group in the adhesive layer 3 is preferably in a range of 0.1 to 50 mass%, and more preferably in a range of 0.5 to 40 mass% in the resin composition constituting the adhesive layer 3. This enables effective improvement of adhesion between the metal layer 1 and the adhesive layer 3.

The compound having an oxazoline group is not particularly limited as long as it is a compound having an oxazoline skeleton. Specific examples of the compound having an oxazoline group include compounds having a polystyrene main chain and compounds having an acrylic main chain. Examples of the commercially available product include EPOCROS series manufactured by Nippon Shokubai Co., Ltd.

The proportion of the compound having an oxazoline group in the adhesive layer 3 is preferably in a range of 0.1 to 50 mass%, and more preferably in a range of 0.5 to 40 mass% in the resin composition constituting the adhesive layer 3. This enables effective improvement of adhesion between the metal layer 1 and the adhesive layer 3.

Examples of the compound having an epoxy group include epoxy resins. The epoxy resin is not particularly limited as long as it is a resin capable of forming a crosslinked structure by epoxy groups existing in the molecule, and a known epoxy resin can be used. The weight average molecular weight of the epoxy resin is preferably about 50 to 2000, more preferably about 100 to 1000, and still more preferably about 200 to 800. Note that, in the present disclosure, the weight average molecular weight of the epoxy resin is a value obtained by performing measurement by gel permeation chromatography (GPC) under the condition of using polystyrene as a standard sample.

Specific examples of the epoxy resin include glycidyl ether derivatives of trimethylolpropane, bisphenol A diglycidyl ether, modified bisphenol A diglycidyl ether, bisphenol F type glycidyl ether, novolac glycidyl ether, glycerin polyglycidyl ether, and polyglycerin polyglycidyl ether. The epoxy resin may be used singly or in combination of two or more kinds thereof.

The proportion of the epoxy resin in the adhesive layer 3 is preferably in a range of 0.1 to 50 mass%, and more preferably in a range of 0.5 to 40 mass% in the resin composition constituting the adhesive layer 3. This enables effective improvement of adhesion between the metal layer 1 and the adhesive layer 3.

The polyurethane is not particularly limited, and a known polyurethane can be used. The adhesive layer 3 may be, for example, a cured product of two-liquid curable polyurethane.

The proportion of the polyurethane in the adhesive layer 3 is preferably in a range of 0.1 to 50 mass%, and more preferably in a range of 0.5 to 40 mass% in the resin composition constituting the adhesive layer 3. This enables effective improvement of adhesion between the metal layer 1 and the adhesive layer 3 in an atmosphere in which a component that induces corrosion of the metal layer such as an electrolytic solution is present.

Note that, in a case where the adhesive layer 3 is a cured product of a resin composition containing at least one selected from the group consisting of a compound having an isocyanate group, a compound having an oxazoline group, and an epoxy resin, and the acid-modified polyolefin, the acid-modified polyolefin functions as a main component, and the compound having an isocyanate group, the compound having an oxazoline group, and the compound having an epoxy group each function as a curing agent.

The adhesive layer 3 may contain a modifier having a carbodiimide group.

When the exterior material 10 for a partition member of the present disclosure is manufactured by layering the adhesive layer 3 on the metal layer 1, the heat-sealable resin layer 2, and the like, a resin film formed in advance may be used as the adhesive layer 3. A heat-sealable resin that forms the adhesive layer 3 may be formed into a film on the surface of the metal layer 1, the heat-sealable resin layer 2, or the like by extrusion molding, coating, or the like to form the adhesive layer 3 formed of a resin film.

As described above, a polyurethane adhesive or the like may be used for forming the adhesive layer 3. However, as described above, from the viewpoint of further firmly bonding the metal layer 1 and a layer adjacent thereto (for example, enhancing the adhesive strength in a moist and hot environment), a resin to be used for forming the adhesive layer 3 preferably contains a polyolefin backbone.

Examples of the polyurethane adhesive include a polyurethane adhesive which contains a first component containing a polyol compound and a second component containing an isocyanate compound. Preferred examples thereof include a two-liquid curable polyurethane adhesive in which a polyol such as polyester polyol, a polyether polyol, or an acrylic polyol is used as a first component and an aromatic or aliphatic polyisocyanate is used as a second component. Examples of the polyurethane adhesive include a polyurethane adhesive containing a polyurethane compound obtained by reacting a polyol compound with an isocyanate compound in advance and an isocyanate compound. Examples of the polyurethane adhesive include a polyurethane adhesive containing a polyurethane compound obtained by reacting a polyol compound with an isocyanate compound in advance and a polyol compound. Examples of the polyurethane adhesive include a polyurethane adhesive obtained by curing a polyurethane compound, which is obtained by reacting a polyol compound with an isocyanate compound in advance, by reacting the polyurethane compound with moisture in the air or the like. As the polyol compound, it is preferable to use a polyester polyol having a hydroxyl group in the side chain in addition to the hydroxyl group at the terminal of the repeating unit. Examples of the second component include aliphatic, alicyclic, aromatic, and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI), and naphthalene diisocyanate (NDI). Examples of the isocyanate-based compound include polyfunctional isocyanate-modified products of one or two or more of these diisocyanates. As the polyisocyanate compound, a multimer (for example, a trimer) can also be used. Examples of such a multimer include adducts, biurets, and nurates.

Other components may be added to the adhesive layer 3 as long as bondability is not inhibited, and a colorant, a thermoplastic elastomer, a tackifier, a filler, or the like may be contained.

The thickness of the adhesive layer 3 is not particularly limited as long as the metal layer 1 and the layer adjacent thereto can be bonded to each other, but is, for example, about 1 µm or more, or about 2 µm or more. The thickness of the adhesive layer 3 is, for example, about 10 µm or less, or about 5 µm or less. A preferable range of the thickness of the adhesive layer 3 is about 1 to 10 µm, about 1 to 5 µm, about 2 to 10 µm, or about 2 to 5 µm.

### [Resin layer 4]

In the present disclosure, for example, as illustrated in Figs. 3 to 5, the exterior material 10 for a partition member may include the resin layer 4 between the metal layer 1 and the heat-sealable resin layer 2 as necessary. In a case where the resin layer 4 is provided between the metal layer 1 and the heat-sealable resin layer 2, the metal layer 1 and the resin layer 4 may be directly layered, or the adhesive layer 3 may be provided between the metal layer 1 and the resin layer 4. The resin layer 4 and the heat-sealable resin layer 2 may be directly layered, or the adhesive layer 5 may be provided between the resin layer 4 and the heat-sealable resin layer 2.

In a case where the resin layer 4 is provided between the metal layer 1 and the heat-sealable resin layer 2, permeation of water or the like from the contents into the metal layer 1 can be suppressed. Therefore, in a case where the exterior material for a partition member is used for the partition member, the expansion of the partition member can be further suppressed. However, in the exterior material for a partition member of the present disclosure, since the corrosion-resistant film is provided on the surface of the metal layer 1 on the heat-sealable resin layer 2 side, corrosion of the metal layer 1 due to water or the like is suppressed, and the resin layer 4 may be provided as necessary.

The resin forming the resin layer 4 is not particularly limited, and examples thereof include a resin forming the resin base material described above and a resin forming a protective layer described later.

The thickness of the resin layer 4 is not particularly limited as long as the effect of the present disclosure is exhibited, and is, for example, about 6 µm or more, preferably about 10 µm or more, and more preferably about 12 µm or more, and is, for example, about 200 µm or less, preferably about 50 µm or less, and more preferably about 35 µm or less, and a preferable range thereof is about 6 to 200 µm, about 6 to 50 µm, about 6 to 35 µm, about 10 to 200 µm, about 10 to 50 µm, about 10 to 35 µm, about 12 to 200 µm, about 12 to 50 µm, or about 12 to 35 µm.

### [Adhesive layer 5]

The adhesive layer 5 is a layer provided as necessary for bonding the resin layer 4 and the heat-sealable resin layer 2 in a case where the exterior material 10 for a partition member of the present disclosure includes the resin layer 4 between the metal layer 1 and the heat-sealable resin layer 2.

The adhesive layer 5 is formed of an adhesive capable of bonding the resin layer 4 and the heat-sealable resin layer 2. The adhesive to be used for forming the adhesive layer 5 is not limited, and the same adhesive as the adhesive exemplified for the adhesive layer 3 is exemplified.

As in the adhesive layer 3, the adhesive component contained in the adhesive forming the adhesive layer 5 is preferably a polyolefin-based adhesive, a polyurethane adhesive, or the like. Also for the adhesive layer 5, from the viewpoint of further firmly bonding the resin layer 4 and the heat-sealable resin layer 2 (for example, enhancing the adhesive strength in a moist and hot environment), a resin to be used for forming the adhesive layer 5 preferably contains a polyolefin backbone. The adhesive layer 5 is preferably formed of the same adhesive as the adhesive layer 3.

Other components may be added to the adhesive layer 5 as long as bondability is not inhibited, similarly to the adhesive layer 3, and a colorant, a thermoplastic elastomer, a tackifier, a filler, or the like may be contained.

The thickness of the adhesive layer 5 is not particularly limited as long as the resin layer 4 and the heat-sealable resin layer 2 can be bonded to each other, but is, for example, about 1 µm or more, or about 2 µm or more. The thickness of the adhesive layer 5 is, for example, about 10 µm or less, or about 5 µm or less. A preferable range of the thickness of the adhesive layer 5 is about 1 to 10 µm, about 1 to 5 µm, about 2 to 10 µm, or about 2 to 5 µm.

### [Protective layer 6]

The protective layer 6 is a layer provided as necessary on the outer side of the metal layer 1 of the exterior material 10 for a partition member of the present disclosure (the side opposite to the heat-sealable resin layer 2 side) for the purpose of protecting the outer side of the exterior material 10 for a partition member.

The material for forming the protective layer 6 is not particularly limited as long as it has a function as a protective layer, that is, a function of protecting at least the outer side of the exterior material 10 for a partition member. The protective layer 6 can be formed using, for example, a resin, and the resin may contain an additive described later.

In a case where the protective layer 6 is formed of a resin, the protective layer 6 can be formed of, for example, a resin film. In a case where the protective layer 6 is formed of a resin film, a resin film formed in advance may be used as the protective layer 6 when the exterior material 10 for a partition member of the present disclosure is manufactured by layering the protective layer 6 on the metal layer 1 and the like. A resin that forms the protective layer 6 may be formed into a film on the surface of the metal layer 1 or the like by extrusion molding, coating, or the like to form the protective layer 6 formed of a resin film. The resin film may be an unstretched film or a stretched film. Examples of the stretched film include a uniaxially stretched film and a biaxially stretched film, and a biaxially stretched film is preferable. Examples of the stretching method for forming a biaxially stretched film include a sequential biaxial stretching method, an inflation method, and a simultaneous biaxial stretching method. Examples of the method for applying a resin include a roll coating method, a gravure coating method, and an extrusion coating method.

Examples of the resin that forms the protective layer 6 include resins such as polyester, polyamide, polyolefin, epoxy resin, acrylic resin, fluororesin, polyurethane, silicone resin, and phenol resin, and modified products of these resins. The resin that forms the protective layer 6 may be a copolymer of these resins or a modified product of the copolymer. A mixture of these resins may be used.

The protective layer 6 preferably contains these resins as a main component, and more preferably contains a polyester or a polyamide as a main component. Here, the main component means a resin component having a content of, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, and still more preferably 99 mass% or more among the resin components contained in the protective layer 6. For example, the fact that the protective layer 6 contains a polyester or a polyamide as a main component means that the content ratio of the polyester or the polyamide among the resin components contained in the protective layer 6 is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, and still more preferably 99 mass% or more.

Among these resins, polyester and polyamide are preferable as the resin that forms the protective layer 6.

Specific examples of the polyester include polyethylene terephthalate, polybutylene terephthalate, polyethylene naphthalate, polybutylene naphthalate, polyethylene isophthalate, and copolymerized polyester. Examples of the copolymerized polyester include copolymerized polyesters having ethylene terephthalate as a main repeating unit. Specific examples thereof include copolymer polyesters that are polymerized with ethylene isophthalate using ethylene terephthalate as a main repeating unit (hereinafter, abbreviated as polyethylene (terephthalate/isophthalate)), polyethylene (terephthalate/adipate), polyethylene (terephthalate/sodium sulfoisophthalate), polyethylene (terephthalate/sodium isophthalate), polyethylene (terephthalate/phenyl-dicarboxylate), and polyethylene (terephthalate/decane dicarboxylate). These polyesters may be used singly or in combination of two or more kinds thereof.

Specific examples of the polyamide include aliphatic polyamides such as nylon 6, nylon 66, nylon 610, nylon 12, nylon 46, and copolymers of nylon 6 and nylon 66; hexamethylenediamine-isophthalic acid-terephthalic acid copolymerized polyamides containing a structural unit derived from terephthalic acid and/or isophthalic acid, such as nylon 6I, nylon 6T, nylon 6IT, and nylon 6I6T (I represents isophthalic acid, and T represents terephthalic acid), and polyamides containing aromatics, such as polyamide MXD6 (polymethaxylylene adipamide); alicyclic polyamides such as polyamide PACM6 (polybis(4-aminocyclohexyl)methane adipamide); polyamides copolymerized with a lactam component or an isocyanate component such as 4,4'-diphenylmethane-diisocyanate, polyester amide copolymers and polyether ester amide copolymers as copolymers of a copolymerized polyamide and a polyester or a polyalkylene ether glycol; and copolymers thereof. These polyamides may be used singly or in combination of two or more kinds thereof.

The protective layer 6 preferably contains at least one of a polyester film, a polyamide film, and a polyolefin film, preferably contains at least one of a stretched polyester film, a stretched polyamide film, and a stretched polyolefin film, still more preferably contains at least one of a stretched polyethylene terephthalate film, a stretched polybutylene terephthalate film, a stretched nylon film, and a stretched polypropylene film, and still more preferably contains at least one of a biaxially stretched polyethylene terephthalate film, a biaxially stretched polybutylene terephthalate film, a biaxially stretched nylon film, and a biaxially stretched polypropylene film.

The protective layer 6 may be a single layer or may include two or more layers. In a case where the protective layer 6 is composed of two or more layers, the protective layer 6 may be a laminate obtained by layering a resin film with an adhesive or the like, or may be a laminate of two or more resin films obtained by co-extruding a resin. The laminate of two or more resin films obtained by co-extruding a resin may be used as the protective layer 6 in an unstretched state, or may be used as the protective layer 6 by uniaxial stretching or biaxial stretching.

In the protective layer 6, specific examples of the laminate of two or more resin films include a laminate of a polyester film and a nylon film, a laminate of two or more nylon films, and a laminate of two or more polyester films, and a laminate of a stretched nylon film and a stretched polyester film, a laminate of two or more stretched nylon films, and a laminate of two or more stretched polyester films are preferable. For example, in a case where the protective layer 6 is a laminate of two resin films, a laminate of a polyester resin film and a polyester resin film, a laminate of a polyamide resin film and a polyamide resin film, or a laminate of a polyester resin film and a polyamide resin film is preferable, and a laminate of a polyethylene terephthalate film and a polyethylene terephthalate film, a laminate of a nylon film and a nylon film, or a laminate of a polyethylene terephthalate film and a nylon film is more preferable. Since the polyester film is hardly discolored when, for example, an electrolytic solution adheres to the surface, in a case where the protective layer 6 is a laminate of two or more resin films, the polyester resin film is preferably located at the outermost layer of the protective layer 6. In the laminate of the polyester resin film and the polyamide resin film, a preferable range of the thickness of the polyester resin film is about 2 to 33 µm, about 2 to 28 µm, about 2 to 23 µm, about 2 to 18 µm, about 2 to 11 µm, about 2 to 8 µm, about 10 to 33 µm, about 10 to 28 µm, about 10 to 23 µm, about 10 to 18 µm, about 10 to 11 µm, about 18 to 33 µm, about 18 to 28 µm, or about 18 to 23 µm, and a preferable range of the thickness of the polyamide resin film is about 2 to 33 µm, about 2 to 28 µm, about 2 to 23 µm, about 2 to 18 µm, about 2 to 11 µm, about 2 to 8 µm, about 10 to 33 µm, about 10 to 28 µm, about 10 to 23 µm, about 10 to 18 µm, about 10 to 11 µm, about 18 to 33 µm, about 18 to 28 µm, or about 18 to 23 µm.

In a case where the protective layer 6 is a laminate of two or more layers of resin films, the two or more layers of resin films may be layered with an adhesive interposed therebetween. Preferable examples of the adhesive include the same adhesives as those exemplified for the adhesive layer 3. Note that the method for layering two or more layers of resin films is not particularly limited, a known method can be employed, examples thereof include a dry lamination method, a sandwich lamination method, an extrusion lamination method, and a thermal lamination method, and a dry lamination method is preferable. In a case where resin films are layered by a dry lamination method, a polyurethane adhesive is preferably used as the adhesive. At this time, the thickness of the adhesive is, for example, about 2 to 5 µm. The lamination may be performed with an anchor coat layer formed on the resin film. Examples of the anchor coat layer include the same adhesives as those exemplified for the adhesive layer 3 described above. At this time, the thickness of the anchor coat layer is, for example, about 0.01 to 1.0 µm.

Additives such as a slipping agent, a flame retardant, an anti-blocking agent, an antioxidant, a light stabilizer, a tackifier, and an antistatic agent may be present on at least one of the surface and the inside of the protective layer 6. The additive may be used singly or as a mixture of two or more kinds thereof.

In the present disclosure, from the viewpoint of enhancing the followability of the exterior material for a partition member, it is preferable that a slipping agent is present on at least one of the surface and the inside of the protective layer 6. The slipping agent is not particularly limited, but an amide-based slipping agent is preferable. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amides include lauric acid amide, palmitic acid amide, stearic acid amide, behenic acid amide, and hydroxystearic acid amide. Specific examples of the unsaturated fatty acid amides include oleic acid amide and erucic acid amide. Specific examples of the substituted amides include N-oleyl palmitic acid amide, N-stearyl stearic acid amide, N-stearyl oleic acid amide, N-oleyl stearic acid amide, and N-stearyl erucic acid amide. Specific examples of the methylol amides include methylol stearic acid amide. Specific examples of the saturated fatty acid bisamides include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenebisbehenic acid amide, hexamethylenehydroxystearic acid amide, N,N'-distearyl adipic acid amide, and N,N'-distearyl sebacic acid amide. Specific examples of the unsaturated fatty acid bisamides include ethylenebisoleic acid amide, ethylenebiserucic acid amide, hexamethylenebisoleic acid amide, N,N'-dioleyl adipic acid amide, and N,N'-dioleyl sebacic acid amide. Specific examples of the fatty acid ester amides include stearamide ethyl stearate. Specific examples of the aromatic bisamides include m-xylylenebisstearic acid amide, m-xylylenebishydroxystearic acid amide, and N,N'-distearylisophthalic acid amide. The slipping agent may be used singly or in combination of two or more kinds thereof, and it is preferable to use a combination of two or more kinds thereof.

In a case where the slipping agent is present on the surface of the protective layer 6, the amount of the slipping agent present is not particularly limited, but is, for example, about 3 mg/m² or more, preferably about 4 mg/m² or more, or about 5 mg/m² or more. The amount of the slipping agent present on the surface of the protective layer 6 is, for example, about 15 mg/m² or less, and preferably about 14 mg/m² or less, or about 10 mg/m² or less. A preferable range of the amount of the slipping agent present on the surface of the protective layer 6 is about 3 to 15 mg/m², about 3 to 14 mg/m², about 3 to 10 mg/m², about 4 to 15 mg/m², about 4 to 14 mg/m², about 4 to 10 mg/m², about 5 to 15 mg/m², about 5 to 14 mg/m², or about 5 to 10 mg/m².

The slipping agent present on the surface of the protective layer 6 may be one obtained by exuding the slipping agent contained in the resin constituting the protective layer 6, or one obtained by applying the slipping agent to the surface of the protective layer 6.

The thickness of the protective layer 6 is not particularly limited as long as the function as the protective layer is exhibited, but the thickness thereof is, for example, about 3 µm or more, and preferably about 10 µm or more. The thickness of the protective layer 6 is, for example, about 50 µm or less, and preferably about 35 µm or less, about 25 µm or less, or about 20 µm or less. A preferable range of the thickness of the protective layer 6 is about 3 to 50 µm, about 3 to 35 µm, about 3 to 25 µm, about 3 to 20 µm, about 10 to 50 µm, about 10 to 35 µm, about 10 to 25 µm, or about 10 to 20 µm, and particularly, in a case where the partition member is reduced in weight and thickness, a preferable range thereof is preferably about 3 to 35 µm, about 3 to 25 µm, or about 3 to 20 µm. In a case where the protective layer 6 is a laminate of two or more resin films, the thickness of the resin film constituting each layer is not particularly limited, but the thickness thereof is, for example, about 2 µm or more, and preferably about 10 µm or more, or about 12 µm or more. The thickness of the resin film constituting each layer is, for example, about 33 µm or less, and preferably about 28 µm or less, about 23 µm or less, about 18 µm or less, about 11 µm or less, or about 8 µm or less. A preferable range of the thickness of the resin film constituting each layer is about 2 to 33 µm, about 2 to 28 µm, about 2 to 23 µm, about 2 to 18 µm, about 2 to 11 µm, about 2 to 8 µm, about 10 to 33 µm, about 10 to 28 µm, about 10 to 23 µm, about 10 to 18 µm, about 10 to 11 µm, about 12 to 33 µm, about 12 to 28 µm, about 12 to 23 µm, or about 12 to 18 µm.

### [Adhesive layer 7]

The adhesive layer 7 is a layer provided as necessary for bonding the protective layer 6 and the metal layer 1 in a case where the exterior material 10 for a partition member of the present disclosure includes the protective layer 6 outside the metal layer 1.

The adhesive layer 7 is formed of an adhesive capable of bonding the protective layer 6 and the metal layer 1. The adhesive to be used for forming the adhesive layer 7 is not limited, and the same adhesive as the adhesive exemplified for the adhesive layer 3 is exemplified.

As in the adhesive layer 3, the adhesive component contained in the adhesive forming the adhesive layer 7 is preferably a polyolefin-based adhesive, a polyurethane adhesive, or the like. Also for the adhesive layer 7, from the viewpoint of further firmly bonding the protective layer 6 and the metal layer 1 (for example, enhancing the adhesive strength in a moist and hot environment), a resin to be used for forming the adhesive layer 7 preferably contains a polyolefin backbone. The adhesive layer 7 is preferably formed of the same adhesive as the adhesive layer 3.

Other components may be added to the adhesive layer 7 as long as bondability is not inhibited, similarly to the adhesive layers 3 and 5, and a colorant, a thermoplastic elastomer, a tackifier, a filler, or the like may be contained. Since the adhesive layer 7 contains a colorant, the outer side of the exterior material for a partition member can be colored. As the colorant, known colorants such as a pigment and a dye can be used. The colorant may be used singly or as a mixture of two or more kinds thereof.

The type of pigment is not particularly limited as long as the bondability of the adhesive layer 7 is not impaired. Examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments, and benzimidazolone-based pigments, and examples of the inorganic pigment include carbon black-based pigments, titanium oxide-based pigments, cadmium-based pigments, lead-based pigments, chromium oxide-based pigments, and iron-based pigments, and also fine powder of mica and fish scale foil.

Of the colorants, carbon black is preferable for the purpose of, for example, blackening the appearance of the exterior material for a partition member.

The average particle diameter of the pigment is not particularly limited, but is, for example, about 0.05 to 5 µm, and preferably about 0.08 to 2 µm. Note that the average particle diameter of the pigment is a median diameter measured by a laser diffraction/scattering particle size distribution measuring apparatus.

The content of the pigment in the adhesive layer 7 is not particularly limited as long as the exterior material for a partition member is colored, but is, for example, about 5 to 60 mass%, and preferably 10 to 40 mass%.

The thickness of the adhesive layer 7 is not particularly limited as long as the protective layer 6 and the metal layer 1 can be bonded to each other, but is, for example, about 1 µm or more, or about 2 µm or more. The thickness of the adhesive layer 7 is, for example, about 10 µm or less, or about 5 µm or less. A preferable range of the thickness of the adhesive layer 7 is about 1 to 10 µm, about 1 to 5 µm, about 2 to 10 µm, or about 2 to 5 µm.

### [Colored layer]

The colored layer is a layer provided between the protective layer 6 and the metal layer 1 as necessary (not illustrated). In a case where the adhesive layer 7 is present, the colored layer may be provided between the protective layer 6 and the adhesive layer 7 or between the adhesive layer 7 and the metal layer 1. The colored layer may be provided outside the protective layer 6. By providing the colored layer, the exterior material for a partition member can be colored.

The colored layer can be formed by, for example, applying an ink containing a colorant to the surface of the protective layer 6 or the surface of the metal layer 1. As the colorant, known colorants such as a pigment and a dye can be used. The colorant may be used singly or as a mixture of two or more kinds thereof.

Specific examples of the colorant contained in the colored layer include the same colorants as those exemplified in the section [Adhesive layer 7].

The exterior material for a partition member in the present disclosure can be used for a partition member disposed between a plurality of heating elements. In the partition member, the exterior material for a partition member can be used by being disposed so as to face each other with the contents (for example, the coolant) interposed therebetween such that the heat-sealable resin layer is on the contents side.

### 3. Method for manufacturing exterior material for partition member

A method for manufacturing an exterior material for a partition member is not particularly limited as long as a laminate in which the layers included in the exterior material for a partition member of the present disclosure are layered can be obtained, and examples thereof include a method including a step of layering at least the metal layer 1 and the heat-sealable resin layer 2. As described above, in the exterior material 10 for a partition member of the present disclosure, layers such as the protective layer 6, the adhesive layer 7, the adhesive layer 3, the resin layer 4, and the adhesive layer 5 can be further layered as necessary.

An example of the method for manufacturing an exterior material for a partition member of the present disclosure is as follows. First, a laminate in which the protective layer 6, the adhesive layer 7, and the metal layer 1 are layered in this order (hereinafter, also referred to as "laminate A") is formed. Specifically, the laminate A can be formed by a dry lamination method in which an adhesive to be used for forming the adhesive layer 7 is applied onto the protective layer 6 or the metal layer 1 whose surface is subjected to a chemical conversion treatment as necessary by a coating method such as a gravure coating method or a roll coating method, and dried, the metal layer 1 or the protective layer 6 is then layered, and the adhesive layer 7 is cured.

Next, the heat-sealable resin layer 2 is layered on the metal layer 1 of the laminate A. In a case where the heat-sealable resin layer 2 is directly layered on the metal layer 1, the heat-sealable resin layer 2 may be layered on the metal layer 1 of the laminate A by a method such as a thermal lamination method or an extrusion lamination method. In a case where the adhesive layer 3 is provided between the metal layer 1 and the heat-sealable resin layer 2, the adhesive layer 3 and the heat-sealable resin layer 2 can be layered by, for example, (1) an extrusion lamination method, (2) a thermal lamination method, (3) a sandwich lamination method, (4) a dry lamination method, or the like. Examples of the (1) extrusion lamination method include a method in which the adhesive layer 3 and the heat-sealable resin layer 2 are extruded to be layered on the metal layer 1 of the laminate A (co-extrusion lamination method, tandem lamination method). Examples of the (2) thermal lamination method include a method in which a laminate in which the adhesive layer 3 and the heat-sealable resin layer 2 are layered is separately formed, and this laminate is layered on the metal layer 1 of the laminate A, and a method in which a laminate in which the adhesive layer 3 is layered on the metal layer 1 of the laminate A is formed, and this laminate is layered on the heat-sealable resin layer 2. Examples of the (3) sandwich lamination method include a method in which the laminate A and the heat-sealable resin layer 2 are bonded with the adhesive layer 3 interposed therebetween while pouring the melted adhesive layer 3 between the metal layer 1 of the laminate A and the heat-sealable resin layer 2 formed into a sheet in advance. Examples of the (4) dry lamination method include a method in which an adhesive for forming the adhesive layer 3 is applied by solution coating and dried or baked to layer the adhesive on the metal layer 1 of the laminate A, and the heat-sealable resin layer 2 formed into a sheet in advance is layered on the adhesive layer 3.

Also in a case where the resin layer 4 is provided between the metal layer 1 and the heat-sealable resin layer 2, for example, the adhesive layer 5 is further provided, and respective layers can be layered by (1) an extrusion lamination method (2) a thermal lamination method, (3) a sandwich lamination method, (4) a dry lamination method, or the like, such that the metal layer 1, the adhesive layer 3, the resin layer 4, the adhesive layer 5, and the heat-sealable resin layer 2 are arranged in this order.

As described above, a laminate including the protective layer 6 provided as necessary/the adhesive layer 7 provided as necessary/the metal layer 1/the adhesive layer 3 provided as necessary/the resin layer 4 provided as necessary/the adhesive layer 5 provided as necessary/the heat-sealable resin layer 2 in this order is formed. In order to strengthen the bondability of the adhesive layers 3, 5, and 7 provided as necessary, the laminate may be further subjected to a heat treatment.

In the exterior material for a partition member, each layer constituting the laminate may be subjected to a surface activation treatment such as a corona treatment, a blast treatment, an oxidation treatment, or an ozone treatment as necessary to improve processing suitability. For example, by subjecting a surface of the protective layer 6 opposite to the metal layer 1 to a corona treatment, the ink printability of the surface of the protective layer 6 can be improved.

### 4. Partition member

A partition member of the present disclosure is a partition member disposed between a plurality of heating elements, and includes contents (a coolant or the like) and an exterior material for packaging the contents. The exterior material is the exterior material for a partition member of the present disclosure described above.

Fig. 6 is a schematic cross-sectional view illustrating an example of a partition member in the present disclosure. As illustrated in Fig. 6, the partition member 20 includes the coolant 21 and the exterior material 10 that encloses the coolant 21, and the exterior material 10 is, for example, the exterior material for a partition member as illustrated in Figs. 1 to 5. The partition member 20 is a bag body in which two exterior materials 10 face each other such that the respective heat-sealable resin layers face each other and end parts 22 are joined by thermal fusion, and the coolant 21 is enclosed in the bag body.

In the present disclosure, since the exterior material is the exterior material for a partition member of the present disclosure described above, the partition member is suppressed from expanding.

In the partition member 20, the exterior material 10 is a member that encloses the contents of the partition member 20 such as the coolant 21. As described above, the exterior material of the partition member 20 is the exterior material 10 for a partition member of the present disclosure.

The contents of the partition member 20 are members enclosed in the exterior material. Note that the term "enclosed" means that it is sealed inside the bag body formed using the exterior material. Since the partition member of the present disclosure is disposed between a plurality of heating elements, the contents of the partition member are typically the coolant 21.

The coolant preferably contains, for example, at least one liquid selected from the group consisting of water, alcohols, esters, ethers, ketones, hydrocarbons, fluorine-based compounds, and silicone-based oils. These liquids may be used singly or as a mixture of two or more kinds thereof.

Examples of the alcohols include alcohols containing 3 or more and 8 or less carbon atoms, such as propanol, isopropanol, butanol, benzyl alcohol, and phenylethyl alcohol; and dihydric or higher alcohols including alkylene glycols such as ethylene glycol and propylene glycol. These may be used singly or as a mixture of two or more kinds thereof.

Examples of the esters include alkyl aliphatic carboxylic acid esters, alkyl carbonic acid diesters, alkyl oxalic acid diesters, and fatty acid esters of ethylene glycol. These may be used singly or as a mixture of two or more kinds thereof.

Examples of the ethers include n-butyl ether, n-propyl ether, and isoamyl ether. These may be used singly or as a mixture of two or more kinds thereof.

Examples of the ketones include ethyl methyl ketone and diethyl ketone. These may be used singly or as a mixture of two or more kinds thereof.

Examples of the hydrocarbons include heptane, octane, nonane, decane, toluene, and xylene. These may be used singly or as a mixture of two or more kinds thereof.

Examples of the fluorine-based compounds include refrigerant 1,1,2,2,3,3,4-heptafluorocyclopentane (HFC-c447ef) and 1,1,1,2,2,3,3,4,4,5,5,6,6-tridecafluorooctane (HFC-76-13sf). These may be used singly or as a mixture of two or more kinds thereof.

Examples of the silicone-based oils include modified silicone oils such as methylpolysiloxane, methylphenylpolysiloxane, cyclic methylsiloxane, and silicone polyether copolymer. These may be used singly or as a mixture of two or more kinds thereof.

Among them, the coolant preferably contains water. Since the heat of vaporization of water is large, the heating element can be efficiently cooled in a case where the coolant contains water. Water is also chemically stable.

The coolant may be neutral, alkaline, or acidic. In a case where the coolant is alkaline or acidic, the reaction between the coolant and the metal layer easily proceeds, so that the effect of the present disclosure is remarkably exhibited.

The coolant may further contain a thickener. Since the viscosity of the coolant is increased by the thickener, when the heating element abnormally generates heat, the seal portion of the exterior material is delaminated, and the coolant is released from the partition member, the time during which the coolant is in contact with the heating element that has abnormally generated heat can be lengthened. As a result, the heating element that has abnormally generated heat can be efficiently cooled. Examples of the thickener include gelatin, xanthan gum, alginic acid, and carboxymethyl cellulose.

The coolant may contain, for example, an antifreeze agent, a preservative, and a pH adjusting agent.

The partition member of the present disclosure may include a core material as contents. It is preferable that the core material can hold the coolant 21.

Examples of the material of the core material include a porous material. The porous material preferably contains, for example, at least one of a fibrous material and particles. Examples of the porous material containing a fibrous material include paper, a cotton sheet, a polyimide fiber, an aramid fiber, a polytetrafluoroethylene (PTFE) fiber, glass wool, rock wool, a ceramic fiber, and a biosoluble inorganic fiber. Examples of the porous material containing particles include silica particles, alumina particles, calcium silicate, clay mineral, vermiculite, mica, cement, perlite, fumed silica, and aerogel. Examples of the calcium silicate include xonotlite, tobermorite, wollastonite, and gyrolite. Examples of the clay mineral include magnesium silicate, montmorillonite, and kaolinite. These may be used singly or as a mixture of two or more kinds thereof.

As a method for manufacturing of a partition member in the present disclosure, a general method can be used. For example, two exterior materials for a partition member described above are prepared, the heat-sealable resin layers of the exterior materials for a partition member are opposed to each other and stacked, and outer edges of three sides are heat-sealed to obtain a bag body in which one side is opened. After contents (for example, a coolant, a core material, and the like) are put into the bag body from the opening, the opening is sealed, whereby the partition member can be obtained.

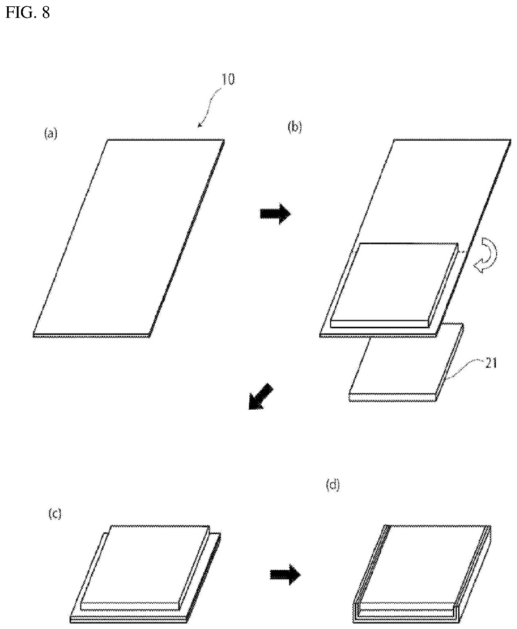

That is, in a case where the coolant is housed in the packaging formed of the exterior material for a partition member of the present disclosure, the packaging is formed such that the heat-sealable resin portion of the exterior material for a partition member of the present disclosure is on the inner side (surface in contact with the coolant). The packaging may be formed in such a manner that the heat-sealable resins of two exterior materials for a partition member are overlapped with each other while facing each other and the peripheral edge portions of the overlapped exterior materials for a partition member are heat-sealed, or as in the example illustrated in Fig. 8, the packaging may be formed in such a manner that one exterior material for a partition member is folded back and overlapped, and the peripheral edge portions are heat-sealed. In the case of folding back and superimposing, as in the example illustrated in Fig. 8, sides other than the folded sides may be heat-sealed to form the packaging by three-way sealing, or folding-back may be performed so that a flange portion (a region where the heat-sealable resin layers are in contact with each other) can be formed and then four sides may be sealed, or when a coolant can be held by impregnating the coolant into a porous material or the like, a heat-sealed portion may be formed by winding the exterior material around the periphery of the coolant and sealing the heat-sealable resin layers, and sealing may be performed by heat-sealing so that the opening parts at both ends are closed. In the exterior material for a partition member, a recessed portion for housing the coolant may be formed by deep drawing molding or stretch forming. As in the example illustrated in Fig. 8, one exterior material for a partition member may be provided with a recessed portion and the other exterior material for a partition member may not be provided with a recessed portion, or the other exterior material for a partition member may also be provided with a recessed portion.

The partition member in the present disclosure can be disposed between a plurality of heating elements and used.

### 5. Structure

A structure in the present disclosure is a structure including a plurality of heating elements and a partition member disposed between the plurality of heating elements, and the partition member is the partition member of the present disclosure described above.

Fig. 7 is a schematic cross-sectional view illustrating an example of a structure in the present disclosure. As illustrated in Fig. 7, a structure 30 includes a plurality of heating elements 31 and the partition member 20 disposed between the plurality of heating elements 31, and the partition member 20 is, for example, the partition member as illustrated in Fig. 6. The structure 30 can include a housing 32 that houses the plurality of heating elements 31 and the partition member 20. In the structure 30, the partition member 20 can also be disposed between a bottom surface of the housing 32 and each heating element 31.

In the structure 30 of the present disclosure, since the partition member is the partition member 20 of the present disclosure, expansion of the partition member is suppressed. Therefore, the influence of the expansion of the partition member on the heating element can be reduced.

In the structure 30 of the present disclosure, examples of the heating element 31 include a battery (for example, a unit cell), an integrated circuit, a control panel, a motor, and an engine. For example, in the case of a battery, when the battery generates heat (for example, abnormally generates heat), the battery becomes a heating element.

Examples of the battery include secondary batteries such as a lithium ion secondary battery, a lithium ion polymer battery, a lithium ion all-solid-state battery, a semi-solid battery, a pseudo-solid-state battery, a polymer battery, an all-polymer battery, a nickel hydrogen battery, a nickel cadmium battery, a lead storage battery, a nickel-iron storage battery, a nickel-zinc storage battery, a silver oxide-zinc storage battery, a metal-air battery, and a multivalent cation battery.

The use application of the structure 30 of the present disclosure varies depending on the type of the heating element 31.

For example, in a case where the heating element is a secondary battery, the structure is an assembled battery. The assembled battery can be used for, for example, a portable electronic device, a mobile communication device, a power source of a vehicle, and the like.

For example, in a case where the heating element is an integrated circuit, the structure is a computer or the like. For example, in a case where the heating element is a control panel, the structure is various devices such as a manufacturing apparatus. For example, in a case where the heating element is a motor or an engine, the structure is a moving body such as a vehicle.

### Examples

Hereinafter, the present disclosure will be specifically described with reference to Examples. However, the present disclosure is not limited to Examples.

### [Example 1]

A polyethylene terephthalate film (thickness: 12 µm) was prepared as a protective layer. An aluminum alloy foil (JIS A8079 material, thickness: 12 µm) was prepared as a metal layer. Next, the polyethylene terephthalate film of the protective layer and the metal layer were bonded to each other using a two-liquid curable urethane adhesive (polyester polyol and an alicyclic isocyanate compound, thickness after curing: 1.5 µm) by a dry lamination method to prepare a laminate of protective layer/adhesive layer/metal layer layered in this order.

Both surfaces of the aluminum alloy foil were subjected to a chemical conversion treatment to form a corrosion-resistant film. The chemical conversion treatment of the aluminum alloy foil was performed by applying a treatment liquid A described later to both surfaces of the aluminum foil by a roll coating method, followed by baking. The thickness of the corrosion-resistant film A was 26 nm.

Next, an unstretched polypropylene film (CPP thickness: 50 µm) was prepared as a heat-sealable resin layer. Then, the metal layer side of the obtained laminate and the heat-sealable resin layer were bonded by a dry lamination method using an adhesive A described later, and the adhesive layer A (thickness after curing: 1.5 µm)/heat-sealable resin layer was layered on the metal layer. Then, the obtained laminate was aged and heated to obtain an exterior material for a partition member including a laminate of protective layer/adhesive layer/metal layer/adhesive layer A/heat-sealable resin layer layered in this order.

### [Example 2]

A laminate of protective layer/adhesive layer/metal layer layered in this order was prepared in the same manner as in Example 1. As in Example 1, both surfaces of the aluminum alloy foil were subjected to a chemical conversion treatment using a treatment liquid A described later to form a corrosion-resistant film A. The thickness of the corrosion-resistant film A was 26 nm.

Next, an unstretched polypropylene film (CPP thickness: 50 µm) was prepared as a heat-sealable resin layer. As a resin layer disposed between the metal layer and the heat-sealable resin layer, a biaxially stretched nylon film (thickness: 15 µm) was prepared. The metal layer side of the obtained laminate and the resin layer were bonded by a dry lamination method using an adhesive A described later, and the adhesive layer A (thickness after curing: 1.5 µm)/resin layer was layered on the metal layer. The resin layer side of the obtained laminate and the heat-sealable resin layer were bonded by a dry lamination method using an adhesive A described later, and the adhesive layer A (thickness after curing: 1.5 µm)/heat-sealable resin layer was layered on the resin layer. Then, the obtained laminate was aged and heated to obtain an exterior material for a partition member including a laminate of protective layer/adhesive layer/metal layer/adhesive layer A/resin layer/adhesive layer A/heat-sealable resin layer layered in this order.

### [Example 3]

An exterior material for a partition member including a laminate of protective layer/adhesive layer/metal layer/adhesive layer A/heat-sealable resin layer layered in this order was obtained in the same manner as in Example 1 except that both surfaces of the aluminum alloy foil were subjected to a chemical conversion treatment using a treatment liquid B described later instead of the treatment liquid A to form a corrosion-resistant film B. The thickness of the corrosion-resistant film B was 23 nm.

### [Example 4]

An exterior material for a partition member including a laminate of protective layer/adhesive layer/metal layer/adhesive layer A/heat-sealable resin layer layered in this order was obtained in the same manner as in Example 1 except that both surfaces of the aluminum alloy foil were subjected to a chemical conversion treatment using a treatment liquid C described later instead of the treatment liquid A to form a corrosion-resistant film C. The thickness of the corrosion-resistant film C was 15 nm.

### [Example 5]

An exterior material for a partition member including a laminate of protective layer/adhesive layer/metal layer/adhesive layer A/heat-sealable resin layer layered in this order was obtained in the same manner as in Example 1 except that both surfaces of the aluminum alloy foil were subjected to a chemical conversion treatment using a treatment liquid D described later instead of the treatment liquid A to form a corrosion-resistant film D. The thickness of the corrosion-resistant film D was 17 nm.

### [Example 6]

An exterior material for a partition member including a laminate of protective layer/adhesive layer/metal layer/adhesive layer A/heat-sealable resin layer layered in this order was obtained in the same manner as in Example 1 except that both surfaces of the aluminum alloy foil were subjected to a chemical conversion treatment using a treatment liquid E described later instead of the treatment liquid A to form a corrosion-resistant film E. The thickness of the corrosion-resistant film E was 29 nm.

### [Example 7]

An exterior material for a partition member including a laminate of protective layer/adhesive layer/metal layer/adhesive layer B/heat-sealable resin layer layered in this order was obtained in the same manner as in Example 1 except that an adhesive B described later was used instead of the adhesive A as an adhesive for the metal layer side of the laminate of protective layer/adhesive layer/metal layer layered in this order and the heat-sealable resin layer.

### [Example 8]

An exterior material for a partition member including a laminate of protective layer/adhesive layer/metal layer/adhesive layer C/heat-sealable resin layer layered in this order was obtained in the same manner as in Example 1 except that an adhesive C described later was used instead of the adhesive A as an adhesive for the metal layer side of the laminate of protective layer/adhesive layer/metal layer layered in this order and the heat-sealable resin layer.

### [Example 9]

A polyethylene terephthalate film (thickness: 12 µm) was prepared as a protective layer. An aluminum alloy foil (JIS A8079 material, thickness: 12 µm) was prepared as a metal layer. Next, the polyethylene terephthalate film of the protective layer and the metal layer were bonded to each other using the adhesive A described later (thickness after curing: 1.5 µm) by a dry lamination method to prepare a laminate of protective layer/adhesive layer/metal layer layered in this order.

Both surfaces of the aluminum alloy foil were subjected to a chemical conversion treatment to form a corrosion-resistant film. The chemical conversion treatment of the aluminum alloy foil was performed by applying a treatment liquid A described later to both surfaces of the aluminum foil by a roll coating method, followed by baking. The thickness of the corrosion-resistant film A was 26 nm.

Next, an unstretched polypropylene film (CPP thickness: 50 µm) was prepared as a heat-sealable resin layer. Then, the metal layer side of the obtained laminate and the heat-sealable resin layer were bonded by a dry lamination method using an adhesive A described later, and the adhesive layer A (thickness after curing: 1.5 µm)/heat-sealable resin layer was layered on the metal layer. Then, the obtained laminate was aged and heated to obtain an exterior material for a partition member including a laminate of protective layer/adhesive layer A/metal layer/adhesive layer A/heat-sealable resin layer layered in this order.

### [Example 10]

A laminate of protective layer/adhesive layer A/metal layer layered in this order was prepared in the same manner as in Example 9. As in Example 1, both surfaces of the aluminum alloy foil were subjected to a chemical conversion treatment using a treatment liquid A described later to form a corrosion-resistant film A. The thickness of the corrosion-resistant film A was 26 nm.

Next, an unstretched polypropylene film (CPP thickness: 50 µm) was prepared as a heat-sealable resin layer. As a resin layer disposed between the metal layer and the heat-sealable resin layer, a biaxially stretched nylon film (thickness: 15 µm) was prepared. The metal layer side of the obtained laminate and the resin layer were bonded by a dry lamination method using an adhesive A described later, and the adhesive layer A (thickness after curing: 1.5 µm)/resin layer was layered on the metal layer. The resin layer side of the obtained laminate and the heat-sealable resin layer were bonded by a dry lamination method using an adhesive A described later, and the adhesive layer A (thickness after curing: 1.5 µm)/heat-sealable resin layer was layered on the resin layer. Then, the obtained laminate was aged and heated to obtain an exterior material for a partition member including a laminate of protective layer/adhesive layer A/metal layer/adhesive layer A/resin layer/adhesive layer A/heat-sealable resin layer layered in this order.

### [Comparative Example 1]

An exterior material for a partition member including a laminate of protective layer/adhesive layer/metal layer/adhesive layer A/heat-sealable resin layer layered in this order was obtained in the same manner as in Example 1 except that the chemical conversion treatment of the aluminum alloy foil was not performed.

### [Comparative Example 2]

An exterior material for a partition member including a laminate of protective layer/adhesive layer/metal layer/adhesive layer B/heat-sealable resin layer layered in this order was obtained in the same manner as in Example 7 except that the chemical conversion treatment of the aluminum alloy foil was not performed.

### [Adhesive]

- Adhesive A: polyolefin-based adhesive (composition: a main component containing modified polyolefin and a curing agent containing epoxy)
- Adhesive B: urethane-based adhesive (composition: a main component containing polyether polyol and a curing agent containing an aromatic isocyanate compound)
- Adhesive C: urethane-based adhesive (composition: a main component containing polyester polyol and a curing agent containing aliphatic isocyanate and aromatic isocyanate)

### [Treatment liquid]

- Treatment liquid A: chemical conversion treatment containing chromium phosphate and acrylic resin
- Treatment liquid B: chemical conversion treatment containing zirconium phosphate
- Treatment liquid C: chemical conversion treatment containing zirconium phosphate and organic resin (rich in inorganic component)
- Treatment liquid D: chemical conversion treatment containing zirconium phosphate and organic resin (rich in organic component)
- Treatment liquid E: chemical conversion treatment containing chromium phosphate and organic resin

### [XPS analysis of corrosion-resistant film]

Under the following measurement conditions, the surface of the corrosion-resistant films A to E of respective aluminum alloy foils used in Examples, and the surface of the aluminum alloy foil used in Comparative Examples on which the corrosion-resistant film was not formed (Ref: untreated ALM) were each subjected to X-ray photoelectron spectroscopy (XPS analysis) to measure the atomic composition ratio (at%) of each element. In this measurement, the surface of the aluminum alloy foil was exposed by delaminating each laminate, the surface was wiped with an organic solvent, and dried, and then the measurement was performed. The results are shown in Table 1.

### <Measurement conditions>

- Equipment used: "PHI 5000 VersaProbe III" (scanning X-ray photoelectron spectrometer manufactured by ULVAC-PHI, Inc.)
- Spectrum sampling conditions
   Incident X-rays: AlKα (monochromatic X-rays, hν = 1486.6 eV)
   X-ray output: 50 W (15 kV·3.3 mA)
   X-ray beam diameter: 200 µmφ
   X-ray scanning: 700 µm × 200 µm (surface XPS analysis)
   Photoelectron capture angle: 45 degrees
   Charge neutralization: electron neutralization gun, low acceleration ion irradiation
- Low-speed electron irradiation condition... emission 10 µA, bias potential 1.0 V
- Low acceleration ion irradiation condition...ion species Ar+, acceleration voltage 0.11 kV, emission 7 mA

**[Table 1]**

| | Detection element(at%) | | | | | | | | | |
|---|---|---|---|---|---|---|---|---|---|---|
| Corrosion-resistant film | C | N | O | F | Al | Si | P | S | Cr | Zr |
| A | 54.4 | 1.7 | 40.1 | - | 0.5 | - | 1.7 | - | 1.7 | - |
| B | 15.5 | 3.1 | 62.2 | - | 0.2 | - | 11.5 | - | - | 7.5 |
| C | 69.0 | 6.8 | 20.9 | 0.9 | - | 1.7 | - | 0.4 | - | 0.3 |
| D | 75.1 | 5.2 | 19.6 | - | - | - | - | - | - | 0.1 |
| E | 57.0 | 3.3 | 30.6 | 1.7 | 0.3 | - | 4.3 | - | 2.9 | - |
| Ref: untreated ALM | 18.2 | - | 53.7 | 0.2 | 27.9 | - | - | - | - | - |

### [Evaluation of expansion of partition member]

Each exterior material for a partition member obtained in Examples and Comparative Examples was set to a size of TD 100 mm × MD 150 mm, and two sheets of each were prepared. Next, the heat-sealable resin layers of the exterior material were stacked so as to face each other, and the outer edges of three sides were heat-welded to obtain a bag body having an opening on one side of 150 mm. Then, glass wool having a size of 70 mm × 100 mm was stored in the bag body, and 10 g of water was further injected. Thereafter, the inside of the bag body was depressurized to about 100 Pa, and the opening part of the bag body was sealed by heat-welding (seal width: 10 mm). As a result, a partition member as a test sample was obtained. An acceleration test was performed in which the obtained partition member was stored in a thermostatic bath in an environment of a relative humidity of 10% or less, a temperature of 90°C, and a relative humidity of 10% or less for 30 days. Presence or absence of expansion of the partition member after the acceleration test was checked by both of visual observation and palpation, and in a case where expansion was confirmed in either case, it was determined that the partition member was expanded. The results are shown in Table 2.

### [Adhesion evaluation of exterior material]

Each exterior material for a partition member obtained in Examples and Comparative Examples was set to a size of TD 100 mm × MD 150 mm. Using a PCT apparatus (HAST tester PC-R8 manufactured by HIRAYAMA Manufacturing Corporation), the exterior material was stored in a moist and hot environment (temperature: 120°C, relative humidity: 100%, pressure: 0.199 MPa) for 16 days. The adhesion strength of the exterior material before and after storage was measured. The measurement point of the adhesion strength is an interface point between the metal layer and a layer on the heat-sealable resin layer side of the exterior material (a portion where the adhesive layer bonded to the metal layer is located). A specific method of measuring the adhesion strength is as follows. Each exterior material for a partition member was further cut into a rectangle of TD 15 mm × MD 100 mm to obtain a measurement sample. Next, the metal layer (aluminum alloy foil) of the measurement sample and the layer bonded to the metal layer with the adhesive layer interposed therebetween (the heat-sealable resin layer in Examples 1 and 3 to 8 and Comparative Examples 1 and 2, the resin layer in Example 2) were partially T-shaped peeled off in the machine direction, the aluminum alloy foil side and the heat-sealable resin layer side were then fixed to a gripper of a tensile tester so that the machine direction was the tensile direction, and measurement was performed at a distance between chucks of 50 mm and a tensile speed of 100 mm/min to obtain the adhesion strength. The results are shown in Table 2.

**[Table 2]**

| | Exterior material for partition member | | Evaluation of expansion of partition member (presence or absence of expansion) | Evaluation of interlayer adhesion of exterior material Adhesion strength before and after moist and hot environment storage (N/15mm) | |
|---|---|---|---|---|---|
| | Corrosion-resistant film of metal layer | Adhesive for bonding metal layer and heat-sealable resin layer (or resin layer*) | | Before storage | After storage |
| Example 1 | A | A | Absent | 12.5 | 8.7 |
| Example 2 | A | A* | Absent | 7.3 | 9.0 |
| Example 3 | B | A | Absent | 12.1 | 10.0 |
| Example 4 | C | A | Absent | 9.5 | 11.2 |
| Example 5 | D | A | Absent | 8.1 | 7.5 |
| Example 6 | E | A | Absent | 7.2 | 11.3 |
| Example 7 | A | B | Absent | 15.8 | 0.3 |
| Example 8 | A | C | Absent | 9.4 | 0.5 |
| Example 9 | A | A | Absent | 12.8 | 9.1 |
| Example 10 | A | A | Absent | 8.0 | 9.5 |
| Comparative Example 1 | Absent | A | Present | 5.8 | 0.3 |
| Comparative Example 2 | Absent | B | Present | 10.5 | 0.3 |

As described above, the present disclosure provides the invention of the following aspects.
Item 1. An exterior material for a partition member being used for a partition member disposed between a plurality of heating elements, the exterior material for a partition member including a laminate including at least a metal layer and a heat-sealable resin layer, wherein
   the metal layer includes a corrosion-resistant film on a surface on the heat-sealable resin layer side.
Item 2. The exterior material for a partition member according to item 1, wherein the corrosion-resistant film is detected to have an atomic composition ratio of Cr or Zr of 0.1 at% or more by X-ray photoelectron spectroscopy.
Item 3. The exterior material for a partition member according to item 1 or 2, wherein a thickness of the corrosion-resistant film is 1 nm or more.
Item 4. The exterior material for a partition member according to any one of items 1 to 3, further including an adhesive layer between the metal layer and the heat-sealable resin layer.
Item 5. The exterior material for a partition member according to item 4, wherein the adhesive layer is formed of a cured product of a polyolefin-based adhesive.
Item 6. The exterior material for a partition member according to any one of items 1 to 5, further including an adhesive layer between the metal layer and the heat-sealable resin layer; and
   a resin layer between the adhesive layer and the heat-sealable resin layer.
Item 7. The exterior material for a partition member according to any one of items 1 to 6, further including a protective layer on a side of the metal layer opposite to the heat-sealable resin layer side.
Item 8. The exterior material for a partition member according to any one of items 1 to 7, wherein the metal layer contains aluminum.
Item 9. The exterior material for a partition member according to any one of items 1 to 8, wherein the heat-sealable resin layer contains polypropylene.
Item 10. The exterior material for a partition member according to any one of items 1 to 9, wherein the heating element is a battery.
Item 11. A partition member being disposed between a plurality of heating elements, the partition member including contents and an exterior material for packaging the contents, wherein
   the exterior material is the exterior material for a partition member according to any one of items 1 to 9.
Item 12. The partition member according to item 11, wherein the contents contain water.
Item 13. The partition member according to item 11, wherein the heating element is a battery.
Item 14. A structure including a plurality of heating elements and a partition member disposed between the plurality of heating elements, wherein
   the partition member is the partition member according to item 11.
Item 15. The structure according to item 14, wherein the heating element is a battery.
Item 16. A method for manufacturing an exterior material for a partition member, the exterior material for a partition member being used for a partition member disposed between a plurality of heating elements, the method including a step of obtaining a laminate in which at least a metal layer and a heat-sealable resin layer are layered, wherein
   the metal layer includes a corrosion-resistant film on a surface on the heat-sealable resin layer side.

### Reference Signs List

1 Metal layer
2 Heat-sealable resin layer
3 Adhesive layer
4 Resin layer
5 Adhesive layer
6 Protective layer
7 Adhesive layer
10 Exterior material for partition member
20 Partition member
21 Coolant
22 End part
30 Structure
31 Heating element
32 Housing

## Claims

1. An exterior material for a partition member being used for a partition member disposed between a plurality of heating elements, the exterior material for a partition member comprising a laminate including at least a metal layer and a heat-sealable resin layer, wherein
the metal layer includes a corrosion-resistant film on a surface on the heat-sealable resin layer side.

2. The exterior material for a partition member according to claim 1, wherein the corrosion-resistant film is detected to have an atomic composition ratio of Cr or Zr of 0.1 at% or more by X-ray photoelectron spectroscopy.

3. The exterior material for a partition member according to claim 1 or 2, wherein a thickness of the corrosion-resistant film is 1 nm or more.

4. The exterior material for a partition member according to claim 1 or 2, further comprising an adhesive layer between the metal layer and the heat-sealable resin layer.

5. The exterior material for a partition member according to claim 4, wherein the adhesive layer is formed of a cured product of a polyolefin-based adhesive.

6. The exterior material for a partition member according to claim 1 or 2, further comprising an adhesive layer between the metal layer and the heat-sealable resin layer; and
a resin layer between the adhesive layer and the heat-sealable resin layer.

7. The exterior material for a partition member according to claim 1 or 2, further comprising a protective layer on a side of the metal layer opposite to the heat-sealable resin layer side.

8. The exterior material for a partition member according to claim 1 or 2, wherein the metal layer contains aluminum.

9. The exterior material for a partition member according to claim 1 or 2, wherein the heat-sealable resin layer contains polypropylene.

10. The exterior material for a partition member according to claim 1 or 2, wherein the heating element is a battery.

11. A partition member being disposed between a plurality of heating elements, the partition member comprising contents and an exterior material for packaging the contents, wherein
the exterior material is the exterior material for a partition member according to claim 1 or 2.

12. The partition member according to claim 11, wherein the contents contain water.

13. The partition member according to claim 11, wherein the heating element is a battery.

14. A structure comprising a plurality of heating elements and a partition member disposed between the plurality of heating elements, wherein
the partition member is the partition member according to claim 11.

15. The structure according to claim 14, wherein the heating element is a battery.

16. A method for manufacturing an exterior material for a partition member, the exterior material for a partition member being used for a partition member disposed between a plurality of heating elements, the method including a step of obtaining a laminate in which at least a metal layer and a heat-sealable resin layer are layered, wherein
the metal layer includes a corrosion-resistant film on a surface on the heat-sealable resin layer side.
